# EUROPEAN PATENT APPLICATION

(11) **EP 4 687 092 A1**
(43) Date of publication of application: **04.02.2026**
(21) Application number: 25191397.6
(22) Date of filing: 23.07.2025
(51) Int. Cl.: G06Q 30/0601

(54) **SYSTEMS AND METHODS FOR PERSONALIZING BUNDLES BASED ON PERSONAS**

(30) Priority: 30.07.2024 US 202418789602
(71) Applicant: Ingram Micro Inc., Irvine, CA 92612 (US)
(72) Inventor: SAHOO, Sanjib, Naperville, IL 60564 (US)
(74) Representative: Wachinger, Julian Friedrich

(57) **Abstract**

Computerized systems and methods are described for executing personalized bundling processes. Methods include receiving user inputs specifying preferences for product bundles and utilizing a Real-Time Data Mesh (RTDM) to retrieve relevant real-time data. An Advanced Analytics and Machine Learning (AAML) Module analyzes these inputs alongside market data to generate personalized bundle recommendations. Recommendations are then displayed to the user via a Single Pane of Glass User Interface (SPoG UI) and, upon user confirmation, transferred as orders to a vendor system. Validation steps use algorithms within the AAML Module to ensure accuracy and relevance of the bundles. Real-time reports on user engagement and bundle success rates are generated. The system, accessible on multiple devices, integrates machine learning models that continually refine the bundling process based on evolving data patterns and user feedback, enhancing personalization and efficiency.

## Description

### CROSS REFERENCE TO RELATED APPLICATIONS

This application is a Continuation-In-Part (CIP) of U.S. Patent Application No. 18/341,714, filed on June 26, 2023 and U.S. Patent Application No. 18/349,836, filed on July 10, 2023; U.S. Provisional Application No. 63/513,073, filed on July 11, 2023; U.S. Provisional Application No. 63/513,078, filed on July 11, 2023; U.S. Provisional Application No. 63/515,075, filed on July 21, 2023; and U.S. Provisional Application No. 63/515,076, filed on July 21, 2023. Each of these applications is incorporated herein by reference in its entirety.

### BACKGROUND

Traditional ordering processes in distribution and supply-chain platforms are challenged with inefficiencies, delays, and inaccuracies. In the conventional landscape, multiple systems and vendors usually perform each activity independently, from creating a bill of materials to registering deals, applying pricing, generating quotes, and submitting orders. This approach leads to inefficiencies and a high likelihood of errors.

Enterprise Resource Planning (ERP) systems have served as the mainstay in managing business processes, including distribution and supply chain. These systems act as central repositories where different departments such as finance, human resources, and inventory management can access and share real-time data. While ERPs are comprehensive, they present several challenges in today's complex distribution and supply chain environment. One of the primary challenges is data fragmentation. Data silos across different departments or even separate ERP systems make real-time visibility difficult to achieve. Users lack a comprehensive view of key distribution and supply chain metrics, which adversely affects decision-making processes.

Moreover, ERP systems often do not offer effective data integration capabilities. Traditional ERP systems are not designed to integrate efficiently with external systems or even between different modules within the same ERP suite. This design results in a cumbersome and error-prone manual process to transfer data between systems and affects the flow of information throughout the supply chain. Data inconsistencies occur when information exists in different formats across systems, hindering accurate data analysis and leading to uninformed decision-making.

Data inconsistency presents another challenge. When data exists in different formats or units across departments or ERPs, standardizing this data for meaningful analysis becomes a challenging process. Businesses often resort to time-consuming manual processes for data transformation and validation, which further delays decision-making. Additionally, traditional ERP systems often lack the capabilities to handle large volumes of data effectively. These systems struggle to provide timely insights for operational improvements, particularly problematic for businesses dealing with complex and expansive distribution and supply chain networks.

Data security is another concern, especially considering the sensitive nature of supply chain data, which includes customer details, pricing, and contracts. Ensuring compliance with global regulations on data security and governance adds an additional layer of complexity. Traditional ERP systems often lack robust security features agile enough to adapt to the continually evolving landscape of cybersecurity threats and compliance requirements.

### BRIEF SUMMARY OF THE INVENTION

Automated Personalized Bundling processes are designed to address deficiencies in the distribution industry by providing a unified platform experience. This platform integrates various activities and systems into a single interface, enabling users to streamline the entire bundling process. It reduces the time required for activities like product and service selection, bundle customization, pricing application, and order placement. A technology solution that effectively integrates, streamlines, and accelerates these complex processes, while ensuring data security and compliance, is critically needed.

The distribution platform transitions from traditional model of selling individual Stock Keeping Units (SKUs) to adopting a more integrated approach focused on delivering comprehensive solutions. The transformation described herein is driven by the rapidly evolving nature of technology, which encompasses a wide array of hardware, software, and subscription-based services. Systems and methods automatically bridge this complexity to meet the diverse needs of users, leveraging automated personalized bundling processes. Systems and methods utilize advanced AI models to correlate and analyze user preferences and behavior, enabling the dynamic assembly of tailored bundles that include a mix of products and services. This approach simplifies the user experience by providing a single, coherent solution and also enhances the platform's ability to stay current with technological advancements and market trends. By integrating real-time data analytics, these systems ensure that the bundled offerings are relevant and appealing, addressing the challenge of maintaining compatibility and synergy across different technology variants. The systems and methods are configured to adopt a shift towards solutions over individual SKUs in response to a changing landscape, maximizing utility for users while accommodating continuous innovation inherent in technology products and services.

In the global distribution industry, challenges such as inefficient distribution management, SKU management, and the transition to direct-to-consumer models necessitate innovative solutions. Traditional distribution methods are increasingly insufficient, particularly with shifts in consumer expectations and regulations. The invention addresses these challenges by integrating a comprehensive set of functionalities focused on distribution management, supply chain management, and customer visibility into one platform.

A significant challenge in the technology distribution is how to discern compatibility and synergy among vast arrays of products and SKUs across hardware, software, As-a-Service (AaS), and other technology offerings. Systems and methods in embodiments described herein leverage integration of an interface, data layer, and analytical engine described in detail below to provide a scalable solution. The complexity of accurately bundling diverse technology solutions to meet individual user needs, while being scalable commensurate with the rapid pace of technological advancements, presents a necessity for an advanced, adaptive platform. Traditional methods struggle to filter the relevant signal regarding appropriate technology solutions, from noise. Embodiments described herein can provide effective personalization.

According to some embodiments, a Personalized Bundling Module can be integrated with a Real-Time Data Mesh (RTDM) and a Single Pane of Glass User Interface (SPoG UI). This module uses algorithms to optimize product and service selections based on real-time market data and customer preferences. It employs advanced algorithms to intelligently combine products and services into tailored bundles.

In a non-limiting example, a Bundle Recommendation Engine within the Personalized Bundling Module employs decision tree algorithms and entropy minimization techniques to offer compatible and customized choices to users. An alternative embodiment employs machine learning models like neural networks for more tailored and nuanced bundle recommendations. A Pricing Engine uses a multi-variable linear regression model to predict bundle costs, with an alternative embodiment using more advanced machine learning models like Random Forest.

In an embodiment, the Personalized Bundling Module interacts with the RTDM and SPoG UI. Upon receiving a user request, a Bundle Recommendation Engine can fetch real-time market and customer data from RTDM. The module can utilize decision tree algorithms with entropy minimization for optimizing bundle choices. Alternatively, machine learning models like neural networks can be employed to refine user choices based on nuanced data patterns. A Bundle Pricing Engine can perform cost prediction and customization. In some embodiments, the Pricing Engine employs a multi-variable linear regression model for cost prediction, taking into account variables like base price, customer-specific discounts, and market conditions. An alternative option can implement a Random Forest algorithm for more complex pricing structures.

In some embodiments, the Personalized Bundling Module can initiate a bundling request via the SPoG UI. An Authorization Checker can verify user permissions against role-based access control policies. A Bundle Configuration Aggregator can query the RTDM for current product and service options. In a non-limiting example, the Bundle Configuration Aggregator can assemble bundles using a weighted scoring algorithm. In some embodiments, a Bundle Template Filler can populate a bundle template based on user preferences and market data. An Error-Check Integrator reviews the bundle configuration for errors using predefined rules and algorithms.

Additionally, or alternatively, Error-Check Integrators in the module can use sets of validation algorithms. These could include support vector machines trained on historical data for bundle accuracy. Real-time data can be fetched from various systems via the RTDM, ensuring synchronization. SQL queries pull account-specific data, such as customer preferences or previously identified bundle patterns, directly from integrated databases via RTDM.

Embodiments disclosed herein integrate multiple systems, automate processes, and validate bundle configurations based on intelligent rules. This enables efficient execution of complex tasks without specialized knowledge, reducing time and minimizing errors. Moreover, the invention is adaptable and configurable to meet evolving market and customer demands, thereby maintaining the relevance and sustainability of the distribution model. The invention thus provides an efficient, integrated, and adaptable solution for automating personalized bundling processes in the distribution industry.

Automating personalized bundling based on personas provides sophisticated, data-driven methodology for creating customized combinations of diverse product categories, such as hardware, software, cloud services, and other related offerings, customized to the unique preferences and requirements of different user archetypes or personas. This method involves assembly of various products and services into cohesive bundles that align with the specific characteristics, behaviors, and needs of distinct customer segments. In embodiments disclosed herein, automating personalized bundling can account for rapid technological changes that challenge static algorithms and human analysis. By leveraging data-driven methodologies in real-time, systems and methods described herein dynamically generate personas and personalized bundles based on real-time technology and inventory updates, market research, user data, and evolving technology trends. Processes are provided to enable the assembly of product and service bundles that are not coherent and up-to-date with the latest technological advancements, ensuring relevance and appeal to various customer segments.

In this process, personas are automatically generated based on comprehensive market research and real user data, broadly encompassing attributes including demographics, purchasing patterns, digital engagement, and preferences across various product categories. The identification of personas allows for a nuanced understanding of customer needs in areas such as technology, software applications, cloud computing solutions, and hardware requirements.

Leveraging advanced machine learning algorithms and predictive analytics, the system analyzes a rich array of data, including historical purchases across different product categories, user browsing activities, and interaction data. This analysis helps in discerning the unique preferences and potential needs of each persona, facilitating the creation of highly relevant and appealing bundles.

Some embodiments are directed to a platform that employs advanced machine learning algorithms and dynamic data analysis to address inherent variability and frequent updates in technology product features, (e.g., addressing which laptop has an appropriate battery life, which peripherals have a sought functionality, etc.). By continuously analyzing up-to-date product information and user interaction data, the systems and methodologies can adapt its bundling recommendations in real-time. This ensures the delivery of the most relevant, compatible, and current technology solutions customized to each persona.
automated personalized bundling integrates products and services from different categories, such that each bundle both coherent and comprehensive in meeting a specific user's technological and service needs. This could involve combining current hardware with compatible software solutions, aligning cloud service offerings with user data requirements, integrating a suite of products that collectively enhance user productivity and efficiency, etc. The system is configured to deliver a highly personalized user experience, facilitating increased engagement, customer satisfaction, and loyalty by providing bundles curated and relevant to the individual's specific professional or personal technology needs.

### Single Pane of Glass

The Single Pane of Glass (SPoG) can provide a comprehensive solution that is configured to address these multifaceted challenges. It can be configured to provide a holistic, user-friendly, and efficient platform that provides a distribution process.

According to some embodiments, SPoG can be configured to address supply chain and distribution management by enhancing visibility and control over the supply chain process. Through real-time tracking and analytics, SPoG can deliver valuable insights into inventory levels and the status of goods, ensuring that the process of supply chain and distribution management is handled efficiently.

According to some embodiments, SPoG can integrate multiple touchpoints into a single platform to emulate a direct consumer channel into a distribution platform. This integration provides a unified direct channel for consumers to interact with distributors, significantly reducing the complexity of the supply chain and enhancing the overall customer experience.

SPoG offers an innovative solution for improved inventory management through advanced forecasting capabilities. These predictive analytics can highlight demand trends, guiding companies in managing their inventory more effectively and mitigating the risks of stockouts or overstocks.

According to some embodiments, SPoG can include a global compliance database. Updated in real-time, this database enables distributors to stay abreast with the latest international laws and regulations. This feature significantly reduces the burden of manual tracking, ensuring smooth and compliant cross-border transactions.

According to some embodiments, to facililitate personalized bundling and manage user personas, SPoG integrates data from various OEMs into a single platform. This not only ensures data consistency but also significantly reduces the potential for errors. Furthermore, it provides capabilities to perform personalized bundling efficiently, thereby aligning with specific market needs and requirements.

According to some embodiments, SPoG is its highly configurable and user-friendly platform. Its intuitive interface allows users to easily access and purchase technology, thereby aligning with the expectations of the new generation of tech buyers.

Moreover, SPoG's advanced analytics capabilities offer invaluable insights that can drive strategy and decision-making. It can track and analyze trends in real-time, allowing companies to stay ahead of the curve and adapt to changing market conditions.

SPoG's flexibility and scalability make it a future-proof solution. It can adapt to changing business needs, allowing companies to expand or contract their operations as needed without significant infrastructural changes.

SPoG's innovative approach to resolving the challenges in the distribution industry makes it an invaluable tool. By enhancing supply chain visibility, streamlining inventory management, ensuring compliance, simplifying personalized bundling, and delivering a superior customer experience, it offers a comprehensive solution to the complex problems that have long plagued the distribution sector. Through its implementation, distributors can look forward to increased efficiency, reduced errors, and improved customer satisfaction, leading to sustained growth in the ever-evolving global market.

### Real-Time Data Mesh (RTDM)

The platform can be include implementation(s) of a Real-Time Data Mesh (RTDM), according to some embodiments. The RTDM offers an innovative solution to address these challenges. RTDM, a distributed data architecture, enables real-time data availability across multiple sources and touchpoints. This feature enhances supply chain visibility, allowing for efficient management and enabling distributors to handle disruptions more effectively.

RTDM's predictive analytics capability offers a solution for efficient inventory control. By providing insights into demand trends, it aids companies in managing inventory, reducing risks of overstocking or stockouts.

RTDM's global compliance database, updated in real-time, ensures distributors are current with international regulations. It significantly reduces the manual tracking burden, enabling cross-border transactions.

The RTDM also simplifies SKU management and localization by integrating data from various OEMs, ensuring data consistency and reducing error potential. Its capabilities for personalized bundling align with specific market needs efficiently.

The RTDM enhances customer experience with its intuitive interface, allowing easy access and purchase of technology, meeting the expectations of the new generation of tech buyers.

### Advantages of SPoG and RTDM Integration

Integrating SPoG platform with the RTDM provides a myriad of advantages. Firstly, it offers a holistic solution to the longstanding problems in the distribution industry. With the RTDM's capabilities, SPoG can enhance supply chain visibility, streamline inventory management, ensure compliance, simplify SKU management, and deliver a superior customer experience.

The real-time tracking and analytics offered by RTDM improve SPoG's ability to manage the supply chain and inventory effectively. It provides accurate and current information, enabling distributors to make informed decisions quickly.

Integrating SPoG with RTDM also ensures data consistency and reduces errors in SKU management. By providing a centralized platform for managing data from various OEMs, it simplifies product localization and helps to align with market needs.

The global compliance database of RTDM, integrated with SPoG, facilitates and compliant cross-border transactions. It also reduces the burden of manual tracking, saving significant time and resources.

In some embodiments, a distribution platform incorporates SPoG and RTDM to provide an improved and comprehensive distribution system. The platform can leverage the advantages of a distribution model, addresses its existing challenges, and positions it for sustained growth in the ever-evolving global market.

### BRIEF DESCRIPTION OF THE DRAWINGS/FIGURES

FIG. 1 illustrates one embodiment of an operating environment of a distribution platform, referred to as System in this embodiment.
FIG. 2 illustrates one embodiment of an operating environment of the distribution platform, which builds upon the elements introduced in FIG. 1.
FIG. 3 illustrates an embodiment of a system for distribution management.
FIG. 4 depicts a system for automated personalized bundling processes, according to an embodiment.
FIG. 5 illustrates an RTDM module, according to an embodiment.
FIG. 6 illustrates a SPoG UI, according to an embodiment.
FIG. 7 illustrates a system for automated personalized bundling processes, according to an embodiment.
FIG. 8 is a flow diagram of a method for automated personalized bundling processes, according to some embodiments of the present disclosure.
FIG. 9 is a flow diagram for automated data processing and analytics processes in a personalized bundling system, according to some embodiments of the present disclosure.
FIG. 10 is a flow diagram for automated user interaction and feedback processes in a personalized bundling system, according to some embodiments of the present disclosure.
FIG. 11 is a block diagram of example components of device, according to some embodiments of the present disclosure.
FIGS. 12A to 12Q depict various screens and functionalities of the SPoG UI, according to some embodiments.

### DETAILED DESCRIPTION OF THE INVENTION

Embodiments may be implemented in hardware, firmware, software, or any combination thereof. Embodiments may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic disk storage media; optical storage media; flash memory devices, and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc.

It should be understood that the operations shown in the exemplary methods are not exhaustive and that other operations can be performed as well before, after, or between any of the illustrated operations. In some embodiments of the present disclosure, the operations can be performed in a different order and/or vary.

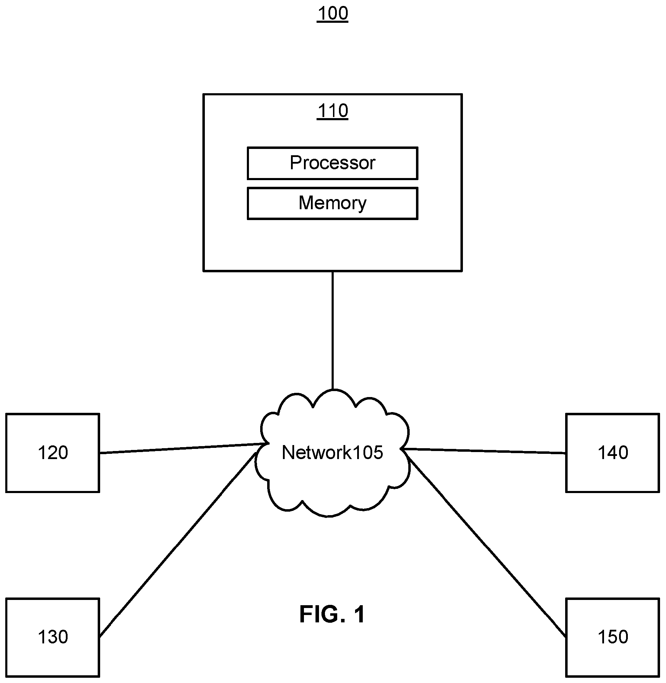

FIG. 1 illustrates an operating environment 100 of a distribution platform, referred to as System 110 in this embodiment. System 110 operates within the context of an information technology (IT) distribution model, catering to various users such as customers 120, end customers 130, vendors 140, resellers 150, and other entities involved in the distribution process. This operating environment encompasses a broad range of characteristics and dynamics that contribute to the success and efficiency of the distribution platform.

Customers 120 within the operating environment of System 110 represent businesses or individuals seeking IT solutions to meet their specific needs. These customers may require a diverse range of IT products such as hardware components, software applications, networking equipment, or cloud-based services. System 110 provides customers with a user-friendly interface, allowing them to browse, search, and select the most suitable IT solutions based on their requirements. Customers can also access real-time data and analytics through System 110, empowering them to make informed decisions and optimize their IT infrastructure.

End customers 130 can be the ultimate beneficiaries of the IT solutions provided by System 110. They may include businesses or individuals who utilize IT products and services to enhance their operations, productivity, or daily activities. End customers rely on System 110 to access a wide array of IT solutions, ensuring they have access to the latest technologies and innovations in the market. System 110 enables end customers to track their orders, receive updates on delivery status, and access customer support services, thereby enhancing their overall experience.

Vendors 140 play a crucial role within the operating environment of System 110. These vendors encompass manufacturers, distributors, and suppliers who offer a diverse range of IT products and services. System 110 acts as a centralized platform for vendors to showcase their offerings, manage inventory, and facilitate transactions with customers and resellers. Vendors can leverage System 110 to streamline their supply chain operations, manage pricing and promotions, and gain insights into customer preferences and market trends. By integrating with System 110, vendors can expand their reach, access new markets, and enhance their overall visibility and competitiveness.

Resellers 150 can be intermediaries within the distribution model who bridge the gap between vendors and customers. They play a vital role in the IT distribution ecosystem by connecting customers with the right IT solutions from various vendors. Resellers may include retailers, value-added resellers (VARs), system integrators, or managed service providers. System 110 enables resellers to access a comprehensive catalog of IT solutions, manage their sales pipeline, and provide value-added services to customers. By leveraging System 110, resellers can enhance their customer relationships, optimize their product offerings, and increase their revenue streams.

Within the operating environment of System 110, there can be various dynamics and characteristics that contribute to its effectiveness. These dynamics include real-time data exchange, integration with existing enterprise systems, scalability, and flexibility. System 110 ensures that relevant data can be exchanged in real-time between users, enabling accurate decision-making and timely actions. Integration with existing enterprise systems such as enterprise resource planning (ERP) systems, customer relationship management (CRM) systems, and warehouse management systems allows for communication and interoperability, eliminating data silos and enabling end-to-end visibility.

System 110 can achieve scalability and flexibility. It can accommodate the growing demands of the IT distribution model, whether it involves an expanding customer base, an increasing number of vendors, or a wider range of IT products and services. System 110 can be configured to handle large-scale data processing, storage, and analysis, ensuring that it can support the evolving needs of the distribution platform. Additionally, System 110 leverages a technology stack that includes .NET, Java, and other suitable technologies, providing a robust foundation for its operations.

In summary, the operating environment of System 110 within the IT distribution model encompasses customers 120, end customers 130, vendors 140, resellers 150, and other entities involved in the distribution process. System 110 serves as a centralized platform that facilitates efficient collaboration, communication, and transactional processes between these users. By leveraging real-time data exchange, integration, scalability, and flexibility, System 110 empowers users to optimize their operations, enhance customer experiences, and drive business success within the IT distribution ecosystem.

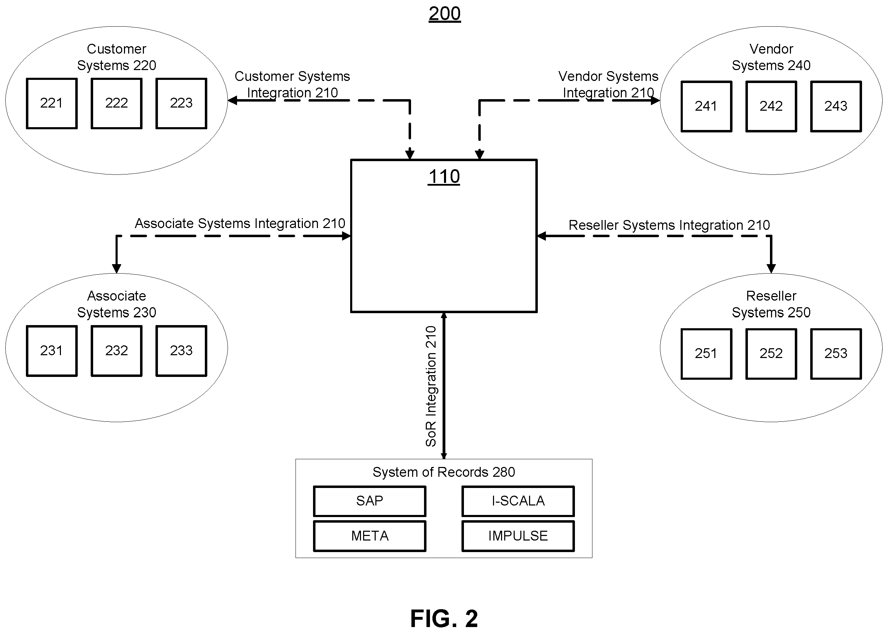

FIG. 2 illustrates an operating environment 200 of the distribution platform, which builds upon the elements introduced in FIG. 1. Within this operating environment, integration points 210 facilitate data flow and connectivity between various customer systems 220, vendor systems 240, reseller systems 260, and other entities involved in the distribution process. The diagram showcases the interconnectedness and the mechanisms that enable efficient collaboration and data-driven decision-making. This operating environment is configured to automate personalized bundling processes utilizing advanced Artificial Intelligence (AI) and Machine Learning (ML) technologies to integrate, process, and analyze data.

In some embodiments, an automated process for personalized bundling is a systematized approach designed to create and offer customized product or service bundles to users, with minimal human intervention. This process integrates several key technological components: The process can include the collection of diverse user data, including demographic information, browsing habits, purchase history, and user interactions. This data is aggregated from various sources such as CRM systems, web analytics tools, and other platforms. Utilizing a Real-Time Data Mesh (RTDM), the system processes and standardizes the collected data, ensuring its readiness for analysis. The RTDM serves as a centralized repository that facilitates the real-time updating and retrieval of user data. Advanced analytics and machine learning algorithms within an AAML Module analyze the aggregated data to identify distinct user personas. This involves segmenting the user base into groups based on shared characteristics and predicted behavior patterns. The Personalized Bundling Module, utilizing the insights gained from the AAML Module, generates customized bundle recommendations for each identified persona. This module applies predictive models and heuristic algorithms to select products or services that align with the specific preferences and needs of each persona. The recommended bundles are presented to the users through an interactive and user-friendly Single Pane of Glass User Interface (SPoG UI). This interface allows users to view, customize, and confirm their bundle choices. The system can incorporate a feedback loop, where user responses to the recommended bundles are collected and analyzed. This feedback is used to continually refine and optimize the bundling algorithms, ensuring that the recommendations remain relevant and effective.

In some embodiments, AI algorithms can be applied for real-time inventory management, customization options, and user choice optimization in a personalized bundling process. Machine learning models such as neural networks and decision trees can be employed to provide more refined and personalized options to the user. Similarly, personalized bundling processes can use ML-based algorithms for real-time generation of personalized bundles. Advanced analytics in the form of ensemble learning or reinforcement learning can be conducted to continually optimize personalized bundling processes. AI and ML technologies in operating environment 200 utilize either or both of supervised and unsupervised learning algorithms. These include convolutional neural networks for pattern recognition and logistic regression models for decision-making processes. AI aspects and components can dynamically adapt to changing data inputs, such as user preferences and market trends, employing reinforcement learning to optimize decision pathways. ML aspects can leverage decision trees and clustering algorithms for predictive analytics, continuously refining its output by assimilating new data, thereby enhancing the accuracy and relevance of personalized bundling processes

Operating environment 200 can include System 110 as a distribution platform that serves as the central hub for managing and facilitating the distribution process. System 110 can be configured to perform functions and operations as a bridge between customer systems 220, vendor systems 240, reseller systems 260, and other entities within the ecosystem. It can integrate communication, data exchange, and transactional processes, providing users with a unified and streamlined experience. Moreover, operating environment 200 can include one or more integration points 210 to ensure smooth data flow and connectivity. Integration Points 210 can employ a hybrid architecture combining RESTful APIs, WebSockets, and the like to facilitate real-time data exchange and synchronization. This architecture can be secured through SSL/TLS encryption protocols, ensuring data confidentiality and integrity during transit. These integration points include:

Customer System Integration: Integration point 210 enables System 110 to connect with customer systems 220, facilitating efficient data exchange and synchronization. Customer systems 220 may include entities like customer system 221, customer system 222, and customer system 223. These systems represent internal systems used by customers, such as ERP or CRM systems. Integration with customer systems 220 allows customers to access real-time information on personalized bundles, pricing details, order tracking, and other relevant data, enhancing their decision-making capabilities. This integration offers an automated, real-time solution for creating and managing personalized bundles, improving operational efficiency for customers.

Data exchange among customer systems 220, vendor systems 240, and reseller systems 260 is enabled by a robust ETL (Extract, Transform, Load) described below in reference to the real-time data mesh architecture, in ensuring data consistency and reliability. This interaction can be governed by predefined business rules and logic, which dictate the data flow and processing methodologies. Advanced mapping and transformation tools are employed to harmonize disparate data formats, allowing for integration and utilization of data across these systems. Orchestrated data exchange supports synchronized operations, enabling efficient and informed decision-making across the distribution network.

Associate System Integration: Integration point 210 enables System 110 to connect with associate systems 230, facilitating efficient data exchange and synchronization. These systems contribute to the overall efficiency of personalized bundling by providing relevant market and product data.

Vendor System Integration: Integration point 210 facilitates the connection between System 110 and vendor systems 240. Vendor systems 240 may include entities like vendor system 241, vendor system 242, and vendor system 243, representing inventory management, pricing systems, and product catalogs. Integration with vendor systems 240 ensures vendors can efficiently update their offerings and receive real-time notifications, to facilitate the personalized bundling process.

Reseller System Integration: Integration point 210 allows reseller systems 260 to connect with System 110. Reseller systems 260 encompass entities such as reseller system 261, reseller system 262, and reseller system 263, handling sales, customer management, and service delivery. Integration empowers resellers to access up-to-date product information and manage customer relationships effectively.

Other Entity System Integration: Integration point 210 also connects other entities involved in the distribution process, facilitating collaboration and efficient distribution. This integration ensures real-time data exchange, for personalized bundling and decision-making in the distribution ecosystem.

System 110's configuration includes sophisticated AI and ML capabilities to tailor product offerings and bundles according to individual customer personas, ensuring relevance and optimization in the distribution process.

Integration points 210 also enable connectivity with System of Records 280, for additional data management and integration. Representing System of Records 280 can represent enterprise resource planning (ERP) systems or customer relationship management (CRM) systems, including both future systems as well as legacy ERP systems such as SAP, Impulse, META, I-SCALA, and others. System of Records can include one or more storage repositories of critical and legacy business data. It facilitates integration of data exchange and synchronization between the distribution platform, System 110, and the ERPs, enabling real-time updates and ensuring the availability of accurate and up-to-date information. Integration points 210 establish connectivity between the System of Records 280 and the distribution platform, allowing stakeholders to leverage rich data stored in the ERPs for efficient collaboration, data-driven decision-making, and streamlined distribution processes. These systems represent the internal systems utilized by customers, vendors, and others.

Integration points 210 within the operating environment 200 can be facilitated through standardized protocols, APIs, and data connectors. These mechanisms ensure compatibility, interoperability, and secure data transfer between the distribution platform and the connected systems. System 110 employs industry-standard protocols, such as RESTful APIs, SOAP, or GraphQL, to establish communication channels and enable data exchange.

In some embodiments, System 110 can incorporate authentication and authorization mechanisms to ensure secure access and data protection. Technologies such as OAuth or JSON Web Tokens (JWT) can be employed to authenticate users, authorize data access, and maintain the integrity and confidentiality of the exchanged information.

In some embodiments, integration points 210 and data flow within the operating environment 200 enable users to operate within a connected ecosystem. Data generated at various stages of the distribution process, including customer orders, inventory updates, shipment details, and sales analytics, flows between customer systems 220, vendor systems 240, reseller systems 260, and other entities. This data exchange facilitates real-time visibility, enables data-driven decision-making, and enhances operational efficiency throughout the distribution platform.

In some embodiments, System 110 leverages advanced technologies such as Typescript, NodeJS, ReactJS, .NET Core, C#, and other suitable technologies to support the integration points 210 and enable communication within the operating environment 200. These technologies provide a robust foundation for System 110, ensuring scalability, flexibility, and efficient data processing capabilities. Moreover, the integration points 210 may also employ algorithms, data analytics, and machine learning techniques to derive valuable insights, optimize distribution processes, and personalize customer experiences. Integration points 210 and data flow within the operating environment 200 enable users to operate within a connected ecosystem. Data generated at various touchpoints, including customer orders, inventory updates, pricing changes, or delivery status, flows between the different entities, systems, and components. The integrated data can be processed, harmonized, and made available in real-time to relevant users through System 110. This real-time access to accurate and current information empowers users to make informed decisions, optimize supply chain operations, and enhance customer experiences.

Several elements in the operating environment depicted in FIG. 2 can include conventional, well-known elements that are explained only briefly here. For example, each of the customer systems, such as customer systems 220, could include a desktop personal computer, workstation, laptop, PDA, cell phone, or any wireless access protocol (WAP) enabled device, or any other computing device capable of interfacing directly or indirectly with the Internet or other network connection. Each of the customer systems typically can run an HTTP client, such as Microsoft's Edge browser, Google's Chrome browser, Opera's browser, or a WAP-enabled browser for mobile devices, allowing customer systems to access, process, and view information, pages, and applications available from the distribution platform over the network.

Moreover, each of the customer systems can typically be equipped with user interface devices such as keyboards, mice, trackballs, touchpads, touch screens, pens, or similar devices for interacting with a graphical user interface (GUI) provided by the browser. These user interface devices enable users of customer systems to navigate the GUI, interact with pages, forms, and applications, and access data and applications hosted by the distribution platform.

The customer systems and their components can be operator-configurable using applications, including web browsers, which run on central processing units such as Intel Pentium processors or similar processors. Similarly, the distribution platform (System 110) and its components can be operator-configurable using applications that run on central processing units, such as the processor system, which may include Intel Pentium processors or similar processors, and/or multiple processor units.

Computer program product embodiments include machine-readable storage media containing instructions to program computers to perform the processes described herein. The computer code for operating and configuring the distribution platform and the customer systems, vendor systems, reseller systems, and other entities' systems to intercommunicate, process webpages, applications, and other data, can be downloaded and stored on hard disks or any other volatile or non-volatile memory medium or device, such as ROM, RAM, floppy disks, optical discs, DVDs, CDs, micro-drives, magneto-optical disks, magnetic or optical cards, nano-systems, or any suitable media for storing instructions and data.

Furthermore, the computer code for implementing the embodiments can be transmitted and downloaded from a software source over the Internet or any other conventional network connection using communication mediums and protocols such as TCP/IP, HTTP, HTTPS, Ethernet, etc. The code can also be transmitted over extranets, VPNs, LANs, or other networks, and executed on client systems, servers, or server systems using programming languages such as C, C++, HTML, Java, JavaScript, ActiveX, VBScript, and others.

It will be appreciated that the embodiments can be implemented in various programming languages executed on client systems, servers, or server systems, and the choice of language may depend on the specific requirements and environment of the distribution platform.

Thereby, operating environment 200 can couple a distribution platform with one or more integration points 210 and data flow to enable efficient collaboration and streamlined distribution processes.

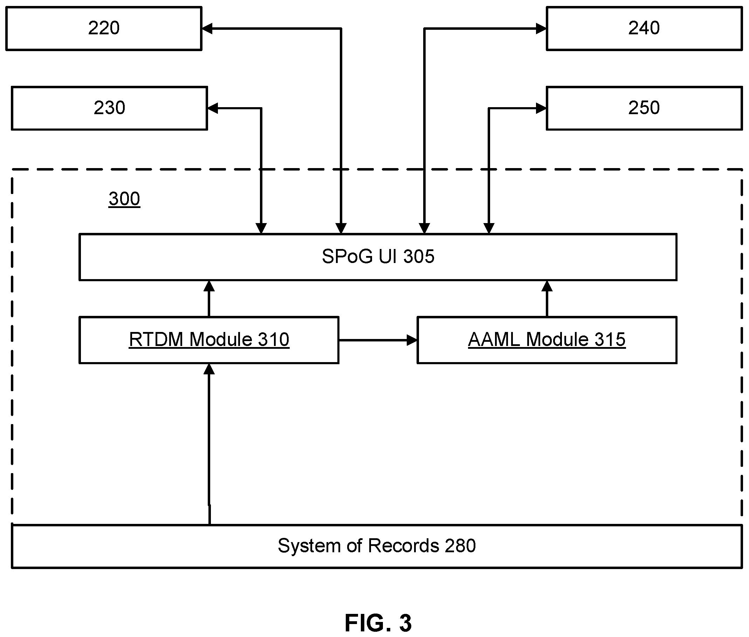

FIG. 3 illustrates a system 300 for supply chain and distribution management. System 300 (FIG. 3) is a supply chain and distribution management solution configured to address the challenges faced by fragmented distribution ecosystems in the global distribution industry. System 300 can include several interconnected components and modules that work in harmony to optimize supply chain and distribution operations, enhance collaboration, and drive business efficiency.

The Single Pane of Glass (SPoG) UI 305 serves as a centralized user interface, providing users with a unified view of the entire supply chain. It consolidates information from various sources and presents real-time data, analytics, and functionalities tailored to the specific roles and responsibilities of users. By offering a customizable and intuitive dashboard-style layout, the SPoG UI enables users to access relevant information and tools, empowering them to make data-driven decisions and efficiently manage their supply chain and distribution activities.

For example, a logistics manager can use the SPoG UI to monitor the status of shipments, track delivery routes, and view real-time inventory levels across multiple warehouses. They can visualize data through interactive charts and graphs, such as a map displaying the current location of each shipment or a bar chart showing inventory levels by product category. By having a unified view of the supply chain, the logistics manager can identify bottlenecks, optimize routes, and ensure timely delivery of goods.

The SPoG UI 305 integrates with other modules of System 300, facilitating real-time data exchange, synchronized operations, and streamlined workflows. Through API integrations, data synchronization mechanisms, and event-driven architectures, SPoG UI 305 ensures smooth information flow and enables collaborative decision-making across the distribution ecosystem. SPoG UI 305 is designed with a user-centric approach, featuring an intuitive and responsive layout. It utilizes front-end technologies to render dynamic and interactive data visualizations. Customizable dashboards allow users to tailor their views based on specific roles and requirements. The UI supports drag-and-drop functionality for ease of use, and its adaptive design ensures compatibility across various devices and platforms. Advanced filtering and search capabilities enable users to efficiently navigate and access relevant supply chain data and insights.

For instance, when a purchase order is generated in the SPoG UI, the system automatically updates the inventory levels, triggers a notification to the warehouse management system, and initiates the shipping process. This integration enables efficient order fulfillment, reduces manual errors, and enhances overall supply chain visibility.

The Real-Time Data Mesh (RTDM) module 310 is another component of System 300, responsible for ensuring the flow of data within the distribution ecosystem. It aggregates data from multiple sources, harmonizes it, and ensures its availability in real-time.

In a distribution network, the RTDM module collects data from various systems, including inventory management systems, point-of-sale terminals, and customer relationship management systems. It harmonizes this data by aligning formats, standardizing units of measurement, and reconciling any discrepancies. The harmonized data can be then made available in real-time, allowing users to access accurate and current information across the supply chain.

The RTDM module 310 can be configured to capture changes in data across multiple transactional systems in real-time. It employs a sophisticated Change Data Capture (CDC) mechanism that constantly monitors the transactional systems, detecting any updates or modifications. The CDC component can be specifically configured to work with various transactional systems, including legacy ERP systems, Customer Relationship Management (CRM) systems, and other enterprise-wide systems, ensuring compatibility and flexibility for businesses operating in diverse environments.

By having access to real-time data, users can make timely decisions and respond quickly to changing market conditions. For example, if the RTDM module detects a sudden spike in demand for a particular product, it can trigger alerts to the production team, enabling them to adjust manufacturing schedules and prevent stockouts.

The RTDM module 310 facilitates data management within supply chain operations. It enables real-time harmonization of data from multiple sources, freeing vendors, resellers, customers, and end customers from constraints imposed by legacy ERP systems. This enhanced flexibility supports improved efficiency, customer service, and innovation.

Another component of System 300 is the Advanced Analytics and Machine Learning (AAML) module 315. Leveraging powerful analytics tools and algorithms such as Apache Spark, TensorFlow, or scikit-learn, the AAML module extracts valuable insights from the collected data. It enables advanced analytics, predictive modeling, anomaly detection, and other machine learning capabilities.

For instance, the AAML module can analyze historical sales data to identify seasonal patterns and predict future demand. It can generate forecasts that help optimize inventory levels, ensure stock availability during peak seasons, and minimize excess inventory costs. By leveraging machine learning algorithms, the AAML module automates repetitive tasks, predicts customer preferences, and optimizes supply chain processes.

In addition to demand forecasting, the AAML module can provide insights into customer behavior, enabling targeted marketing campaigns and personalized customer experiences. For example, by analyzing customer data, the module can identify cross-selling or upselling opportunities and recommend relevant products to individual customers.

Furthermore, the AAML module can analyze data from various sources, such as social media feeds, customer reviews, and market trends, to gain a deeper understanding of consumer sentiment and preferences. This information can be used to inform product development decisions, identify emerging market trends, and adapt business strategies to meet evolving consumer expectations.

System 300 emphasizes integration and interoperability to connect with existing enterprise systems such as ERP systems, warehouse management systems, and customer relationship management systems. By establishing connections and data flows between these systems, System 300 enables smooth data exchange, process automation, and end-to-end visibility across the supply chain. Integration protocols, APIs, and data connectors facilitate communication and interoperability among different modules and components, creating a holistic and connected distribution ecosystem.

The implementation and deployment of System 300 can be tailored to meet specific business needs. It can be deployed as a cloud-native solution using containerization technologies like Docker and orchestration frameworks like Kubernetes. This approach ensures scalability, easy management, and efficient updates across different environments. The implementation process involves configuring the system to align with specific supply chain requirements, integrating with existing systems, and customizing the modules and components based on the business's needs and preferences.

System 300 for supply chain and distribution management is a comprehensive and innovative solution that addresses the challenges faced by fragmented distribution ecosystems. It combines the power of the SPoG UI 305, the RTDM module 310, and the AAML module 315, along with integration with existing systems. By leveraging a diverse technology stack, scalable architecture, and robust integration capabilities, System 300 provides end-to-end visibility, data-driven decision-making, and optimized supply chain operations. The examples and options provided in this description are non-limiting and can be customized to meet specific industry requirements, driving efficiency and success in supply chain and distribution management.

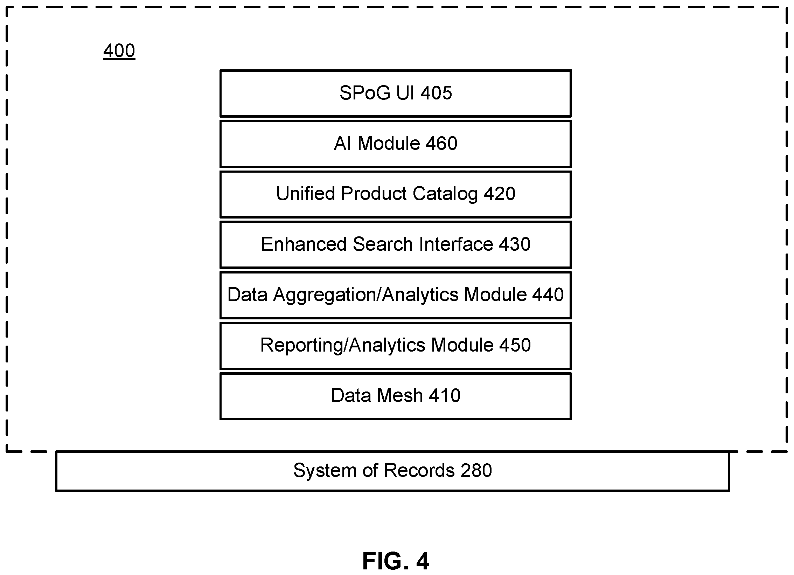

FIG. 4 depicts an embodiment of System 400 for personalized bundling, based on specific user personas. System 400 is configured for integration with existing reseller systems, ensuring efficient data exchange and system synchronization. The embodiment of System 400 enables the creation of customized product and service bundles personalized to specific user requirements and preferences. The system leverages real-time data aggregation and analytics to adaptively configure bundles that incorporate various technology products, including hardware, software, and subscription-based services. This adaptability ensures that the bundling process remains relevant in the face of rapidly evolving technology landscapes and user needs. By integrating AI-driven insights and user interaction data, the system facilitates dynamic bundling strategies that not only address current market trends but also anticipate future shifts. This approach enhances the correlation capabilities with AI models, enabling users to make informed decisions and access comprehensive solutions that align with their unique technological and operational objectives.

The SPoG UI 405 serves as the primary user interface. Users interact with this interface to perform various tasks provides straightforward interaction and customization. It displays information and options that are relevant to the distinct business models and customer demographics of the resellers. It displays real-time data from the Data Mesh 410 and provides controls for initiating actions in System 400. For example, a user can generate a personalized bundle directly from the SPoG UI 405. The SPoG UI is developed using web-based technologies, allowing it to be accessed from various types of devices such as desktop computers, laptops, tablets, and smartphones. SPoG UI 405 provides a comprehensive view of the entire distribution ecosystem, consolidating data and functionalities from various modules into a centralized, easy-to-navigate platform. SPoG UI 405 simplifies the management of complex distribution tasks, offering a streamlined experience for resellers.

Data Mesh 410 is a sophisticated data management layer. It aggregates and harmonizes data from various sources, including ERPs, Vendor platforms, third-party databases, etc.. This component ensures that all operational modules in System 400 access consistent and up-to-date information. System 400 can synchronize with existing reseller systems, ensuring efficient data exchange and system functionality

System 400 includes the Unified Product Catalog 420, which maintains an extensive and constantly updated list of IT products and services. Integrated with the AI Module 460, it ensures that the catalog reflects the latest market demands and user preferences. This catalog offers a broad spectrum of choices across hardware, software, and cloud solutions, catering to the diverse needs of resellers.

The Enhanced Search Interface 430 optimizes the product and service discovery process. Leveraging natural language processing and user-specific data, this interface facilitates efficient and relevant search outcomes. Enhanced Search Interface 430 can be a component of SPoG UI 405 or a separate component, which is designed for efficient and relevant product and service discovery. Utilizing natural language processing and user data, it streamlines the search process, helping resellers quickly locate the items they need.

Data Aggregation and Analytics Module 440 can be configured for collecting and processing data from diverse sources, including vendor and reseller systems, and external market intelligence to generate insights. The insights generated by this module inform the operations of the AI Module 460 and the Unified Product Catalog 420, helping to understand market dynamics and customer needs. System 400 incorporates the Data Aggregation and Analytics Module 440, responsible for collecting and processing data from various sources. This module supports the Personalization Engine 410 and the Unified Product Catalog 420 with insights, aiding in understanding market dynamics and customer needs.

Data Aggregation and Analytics Module 440 in System 400 plays a pivotal role in maintaining the system's responsiveness to the rapid changes in technology and user needs. This module is designed to continuously gather and analyze data from multiple sources, including real-time market trends, customer feedback, and global technological advancements. It integrates data from enterprise resource planning (ERP) systems, vendor platforms, third-party databases, and direct customer inputs, creating a comprehensive data pool. The module employs sophisticated data processing techniques, such as predictive analytics and sentiment analysis, to extract actionable insights from this vast dataset. For example, if there's a surge in demand for a particular type of software solution in the market, the module quickly identifies this trend and reflects it in the system's recommendations and catalog updates. Similarly, customer feedback, whether it's about product preferences or service experiences, is analyzed and used to refine the product offerings and user interface. This integration ensures that System 400 remains agile and adaptive, effectively responding to the evolving technological landscape and nuanced customer requirements. As a result, resellers using System 400 can confidently navigate the fast-paced IT market, armed with up-to-date insights and a platform that evolves in tandem with industry trends and customer expectations.

AI Module 460 automates various distribution processes, including personalized bundling. According to some embodiments, AI Module 460 can be provided as a Personalized Bundling Module integrated with SPoG UI 405 and Data Mesh 410. AI Module 460 automates and enhances the bundling process. By analyzing purchasing patterns, customer preferences, and market data, this module intelligently suggests bundles that are likely to meet the specific needs of different user personas within the reseller organization. For example, it might suggest a bundle combining specific models of laptops with suitable software suites and cloud services, based on the purchasing history and preferences of the reseller's customers. AI Module 460 uses algorithms to optimize product and service selections based on real-time market data and customer preferences. It employs advanced algorithms to intelligently combine products and services into tailored bundles.

In a non-limiting example, AI Module 460 can include Personalized Recommendation Engine 465 to employ decision tree algorithms and entropy minimization techniques to offer compatible and customized choices to users. In an additional or alternative embodiment Personalized Recommendation Engine 465 can employ machine learning models like neural networks for more tailored and nuanced bundle recommendations. Personalized Recommendation Engine 465 can include Pricing Engine 466 to predict bundle costs, for example, utilizing a multi-variable linear regression model, Random Forest, or other methodologies.

In an embodiment, the Personalized Recommendation Engine 465 interacts with the Data Mesh 410 and SPoG UI 405. Upon receiving a user request, Personalized Recommendation Engine 465 can fetch real-time market and customer data from RTDM. The module can utilize decision tree algorithms with entropy minimization for optimizing bundle choices. Alternatively, machine learning models like neural networks can be employed to refine user choices based on nuanced data patterns. Personalized Recommendation Engine 465 can perform cost prediction and customization. In some embodiments, Pricing Engine 466 employs a multi-variable linear regression model for cost prediction, taking into account variables like base price, customer-specific discounts, and market conditions. An alternative option can implement a Random Forest algorithm for more complex pricing structures.

In some embodiments, Personalized Recommendation Engine 465 can initiate a bundling request via the SPoG UI 405. An Authorization Checker can verify user permissions against role-based access control policies. Bundle Configuration Aggregator 467 can query Data Mesh 410 for current product and service options. In a non-limiting example, the Bundle Configuration Aggregator 467 can assemble bundles using a weighted scoring algorithm. In some embodiments, a Bundle Template Filler 468 can populate a bundle template based on user preferences and market data. An Error-Check Integrator 469 can be configured to review bundle configurations for errors using predefined rules and algorithms.

In some embodiments, Personalized Recommendation Engine 465 can analyze user profiles and historical interaction data utilizing machine learning and pattern recognition algorithms via AI Module 460 to match the one or more bundles with a potential consumer of the matched bundle(s). This can be achieved by employing a compatibility scoring system that evaluates each bundle against patterns associated with a user's preferences, past purchases, etc., and/or patterns associated with forecasting potential future needs. For instance, a technology startup showing interest in scalability and innovation might be recommended a bundle that includes cloud computing services, novel cybersecurity solutions, and collaborative work tools. Personalized Recommendation Engine 465 can analyze associated data to recognize a potential conversion involving that user.

In this regard, AI Module 460 can function as a personalization engine to analyze reseller activities and market trends to generate user-specific offerings, dynamically adapting to changes in user behavior and market conditions. AI Module 460 in operation with Personalized Recommendation Engine 465 can also incorporate advanced filtering algorithms to distinguish between essential and non-essential features of technology solutions, personalizing bundles that align with specific operational requirements and strategic goals of the user. For example, for a small business focused on digital marketing, AI Module 460 can utilize filtering algorithms to prioritize solutions with strong CRM and analytics capabilities, effectively filtering out unrelated enterprise-level infrastructure services.

AI Module 460 can be configured to customize the reseller experience, as described above, facilitating the creation of personalized bundles of hardware, software, and services. AI Module 460 provides a sophisticated engine that harnesses real-time data analytics and user behavior patterns to create personalized product and service bundles. This module utilizes advanced algorithms that analyze a vast array of data points, including historical purchase data, browsing history, and specific user interactions within the platform. By interpreting this data, the AI Module 460 can discern subtle trends and preferences unique to each user persona within the reseller's organization.

For instance, if a user frequently explores cloud storage solutions and cybersecurity software, AI Module 460 correlates these interests with current market offerings and user-specific requirements. It then intelligently combines compatible and complementary products, such as pairing a popular cloud storage service with highly-rated cybersecurity software, thus creating a customized bundle. This process is dynamic, allowing the module to continuously learn and adapt to changing user preferences and market conditions. As a result, AI Module 460 can proactively suggest bundles that are personalized for current needs but also anticipate future requirements, ensuring that the resellers are ahead in meeting customer demands.

AI Module 460 is configured to support a personalized user experience for various personas within a reseller's organization. Each user's interaction with the system is tailored based on their role, preferences, and actions. For instance, a user focused on procurement and finance will see different options and recommendations compared to a user engaged in sales or IT management. AI Module 460 performs generation of personalized bundles based on user personas. This functionality enables System 400 to implement IT distribution via a cloud and software-focused approach. AI Module 460 utilizes AI and ML algorithms to understand the specific needs and preferences of different user personas within a reseller's organization.

For instance, if a user persona within the reseller organization predominantly deals with cloud-based solutions, AI Module 460 identifies and suggests bundles that combine relevant cloud services with complementary hardware and software products. This not only enhances the user experience by providing relevant options but also streamlines the procurement process. Moreover, System 400's ability to offer an agnostic marketplace is integral in addressing the industry's challenge of hyperscalers operating isolated marketplaces. Unlike traditional marketplaces, System 400 provides a platform where resellers can access a wide range of products and services, irrespective of the hyperscaler or manufacturer.

To facilitate access to an extensive array of technology solutions, System 400 integrates with multiple vendor platforms through standardized APIs, ensuring that the most current products and services are available in the Unified Product Catalog 420. Thereby, System 400 supports an agnostic marketplace and generates bundles can be dynamically updated with the most current and relevant solutions, addressing the fast-paced evolution of technology needs.

System 400 also includes a Reporting and Analytics Module 450 that provides detailed insights into customer behavior, market trends, and the effectiveness of the personalized bundles. This module enables resellers to make informed decisions based on data-driven insights, further optimizing their offerings and operations.

System 400 facilitates a scenario where a reseller can cater to diverse customer needs through a single platform. A reseller's representative, for example, can quickly identify and procure bundles that are best suited for that segment, based on the recommendations and data provided by System 400. This process not only enhances efficiency but also ensures that the offerings are aligned with the market demand and customer preferences. System 400 provides a solution for IT distribution combining AI/ML technologies to identify and comply with reseller requirements and market trends. By offering a platform that integrates the creation of personalized bundles based on user personas, System 400 addresses the need for an agnostic marketplace and provides a comprehensive suite of tools for efficient IT distribution.

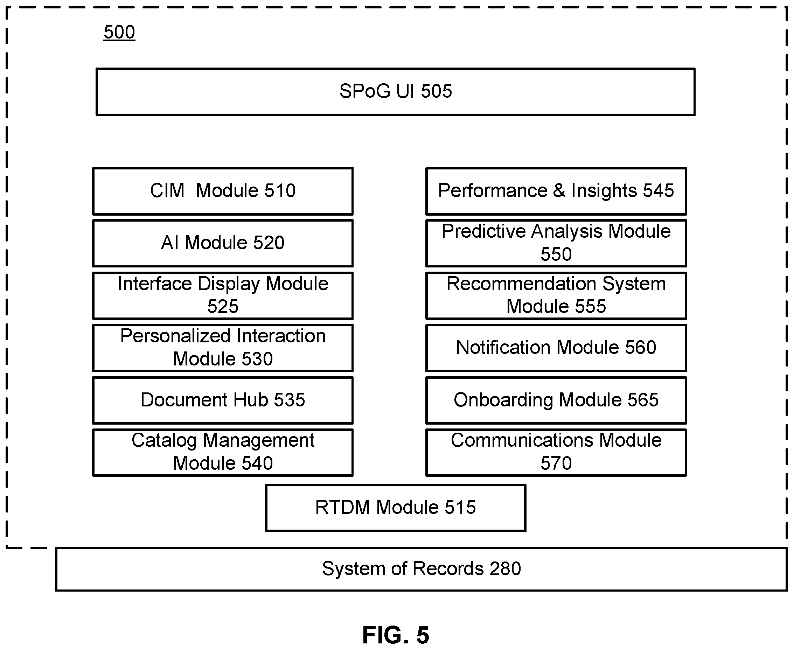

FIG. 5 depicts an embodiment of an advanced distribution platform including System 500 for managing a complex distribution network, which can be an embodiment of System 300, and provides a technology distribution platform for optimizing the management and operation of distribution networks. System 500 includes several interconnected modules, each serving specific functions and contributing to the overall efficiency of supply chain operations. In some embodiments, these modules can include SPoG UI 505, CIM 510, RTDM module 515, AI module 520, Interface Display Module 525, Personalized Interaction Module 530, Document Hub 535, Catalog Management Module 540, Performance and Insight Markers Display 545, Predictive Analytics Module 550, Recommendation System Module 555, Notification Module 560, Self-Onboarding Module 565, and Communication Module 570.

System 500, as an embodiment of System 300, can use a range of technologies and algorithms to enable supply chain and distribution management. These technologies and algorithms facilitate efficient data processing, personalized interactions, real-time analytics, secure communication, and effective management of documents, catalogs, and performance metrics.

The SPoG UI 505, in some embodiments, serves as the central interface within System 500, providing users with a unified view of the entire distribution network. It utilizes frontend technologies such as ReactJS, TypeScript, and Node.js to create interactive and responsive user interfaces. These technologies enable the SPoG UI 505 to deliver a user-friendly experience, allowing users to access relevant information, navigate through different modules, and perform tasks efficiently.

The CIM 510, or Customer Interaction Module, employs algorithms and technologies such as Oracle Eloqua, Adobe Target, and Okta to manage customer relationships within the distribution network. These technologies enable the module to handle customer data securely, personalize customer experiences, and provide access control for users.

The RTDM module 515, or Real-Time Data Mesh module, is a component of System 500 that ensures the smooth flow of data across the distribution ecosystem. It utilizes technologies such as Apache Kafka, Apache Flink, or Apache Pulsar for data ingestion, processing, and stream management. These technologies enable the RTDM module 515 to handle real-time data streams, process large volumes of data, and ensure low-latency data processing. Additionally, the module employs Change Data Capture (CDC) mechanisms to capture real-time data updates from various transactional systems, such as legacy ERP systems and CRM systems. This capability allows users to access current and accurate information for informed decision-making.

The AI module 520 within System 500 can use advanced analytics and machine learning algorithms, including Apache Spark, TensorFlow, and scikit-learn, to extract valuable insights from data. These algorithms enable the module to automate repetitive tasks, predict demand patterns, optimize inventory levels, and improve overall supply chain efficiency. For example, the AI module 520 can utilize predictive models to forecast demand, allowing users to optimize inventory management and minimize stockouts or overstock situations.

The Interface Display Module 525 focuses on presenting data and information in a clear and user-friendly manner. It utilizes technologies such as HTML, CSS, and JavaScript frameworks like ReactJS to create interactive and responsive user interfaces. These technologies allow users to visualize data using various data visualization techniques, such as graphs, charts, and tables, enabling efficient data comprehension, comparison, and trend analysis.

The Personalized Interaction Module 530 utilizes customer data, historical trends, and machine learning algorithms to generate personalized recommendations for products or services. It employs technologies like Adobe Target, Apache Spark, and TensorFlow for data analysis, modeling, and delivering targeted recommendations. For example, the module can analyze customer preferences and purchase history to provide personalized product recommendations, enhancing customer satisfaction and driving sales.

The Document Hub 535 serves as a centralized repository for storing and managing documents within System 500. It utilizes technologies like SeeBurger and Elastic Cloud for efficient document management, storage, and retrieval. For instance, the Document Hub 535 can employ SeeBurger's document management capabilities to categorize and organize documents based on their types, such as contracts, invoices, product specifications, or compliance documents, allowing users to easily access and retrieve relevant documents when needed.

The Catalog Management Module 540 enables the creation, management, and distribution of current product catalogs. It ensures that users have access to the latest product information, including specifications, pricing, availability, and promotions. Technologies like Kentico and Akamai can be employed to facilitate catalog updates, content delivery, and caching. For example, the module can use Akamai's content delivery network (CDN) to deliver catalog information to users quickly and efficiently, regardless of their geographical location.

The Performance and Insight Markers Display 545 collects, analyzes, and visualizes real-time performance metrics and insights related to supply chain operations. It utilizes tools like Splunk and Datadog to enable effective performance monitoring and provide actionable insights. For instance, the module can utilize Splunk's log analysis capabilities to identify performance bottlenecks in the supply chain, enabling users to take proactive measures to optimize operations.

The Predictive Analytics Module 550 employs machine learning algorithms and predictive models to forecast demand patterns, optimize inventory levels, and enhance overall supply chain efficiency. It utilizes technologies such as Apache Spark and TensorFlow for data analysis, modeling, and prediction. For example, the module can utilize TensorFlow's deep learning capabilities to analyze historical sales data and predict future demand, allowing users to optimize inventory levels and minimize costs.

The Recommendation System Module 555 focuses on providing intelligent recommendations to users within the distribution network. It generates personalized recommendations for products or services based on customer data, historical trends, and machine learning algorithms. Technologies like Adobe Target and Apache Spark can be employed for data analysis, modeling, and delivering targeted recommendations. For instance, the module can use Adobe Target's recommendation engine to analyze customer preferences and behavior, and deliver personalized product recommendations across various channels, enhancing customer engagement and driving sales.

The Notification Module 560 enables the distribution of real-time notifications to users regarding important events, updates, or alerts within the supply chain. It utilizes technologies like Apigee X and TIBCO for message queues, event-driven architectures, and notification delivery. For example, the module can utilize TIBCO's messaging infrastructure to send real-time notifications to users' devices, ensuring timely and relevant information dissemination.

The Self-Onboarding Module 565 facilitates the onboarding process for new users entering the distribution network. It provides guided steps, tutorials, or documentation to help users become familiar with the system and its functionalities. Technologies such as Okta and Kentico can be employed to ensure secure user authentication, access control, and self-learning resources. For instance, the module can utilize Okta's identity and access management capabilities to securely onboard new users, providing them with appropriate access permissions and guiding them through the system's functionalities.

The Communication Module 570 enables communication and collaboration within System 500. It provides channels for users to interact, exchange messages, share documents, and collaborate on projects. Technologies like Apigee Edge and Adobe Launch can be employed to facilitate secure and efficient communication, document sharing, and version control. For example, the module can utilize Apigee Edge's API management capabilities to ensure secure and reliable communication between users, enabling them to collaborate effectively.

Thereby, System 500 can incorporate various modules that utilize a diverse range of technologies and algorithms to optimize supply chain and distribution management. These modules, including SPoG UI 505, CIM 510, RTDM module 515, AI module 520, Interface Display Module 525, Personalized Interaction Module 530, Document Hub 535, Catalog Management Module 540, Performance and Insight Markers Display 545, Predictive Analytics Module 550, Recommendation System Module 555, Notification Module 560, Self-Onboarding Module 565, and Communication Module 570, work together to provide end-to-end visibility, data-driven decision-making, personalized interactions, real-time analytics, and streamlined communication within the distribution network. The incorporation of specific technologies and algorithms enables efficient data management, secure communication, personalized experiences, and effective performance monitoring, contributing to enhanced operational efficiency and success in supply chain and distribution management.

### REAL TIME DATA MESH

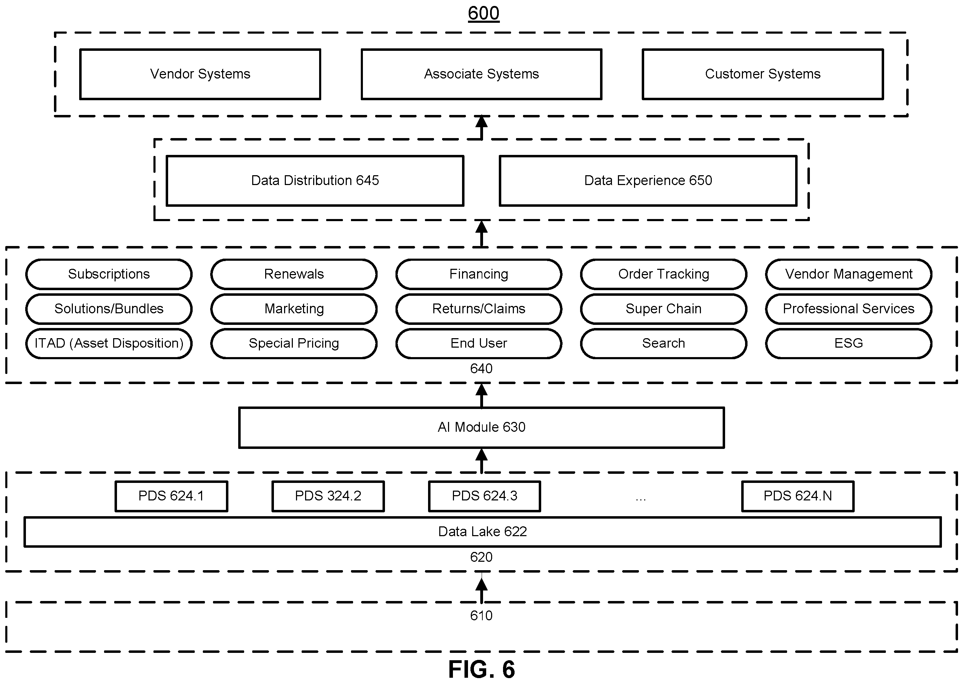

FIG. 6 illustrates RTDM module 600, according to an embodiment. RTDM module 600, which can be an embodiment of RTDM module 310, can include interconnected components, processes, and sub-systems configured to enable real-time data management and analysis.

The RTDM module 600, as depicted in FIG. 5, represents an effective data mesh and change capture component within the overall system architecture. The module can be configured to provide real-time data management and standardization capabilities, enabling efficient operations within the supply chain and distribution management domain.

RTDM module 600 can include an integration layer 610 (also referred to as a "system of records") that integrates with various enterprise systems. These enterprise systems can include ERPs such as SAP, Impulse, META, and I-SCALA, among others, and other data sources. Integration layer 610 can process data exchange and synchronization between RTDM module 600 and these systems. Data feeds can be established to retrieve relevant information from the system of records, such as sales orders, purchase orders, inventory data, and customer information. These feeds enable real-time data updates and ensure that the RTDM module operates with the most current and accurate data.

RTDM module 600 can include data layer 620 configured to process and translate data for retrieval and analysis. Data layer 620 includes data mesh, a cloud-based infrastructure configured to provide scalable and fault-tolerant data storage capabilities. Within the data mesh, multiple Purposive Datastores (PDS) can be deployed to store specific types of data, such as customer data, product data, or inventory data. Each PDS can be optimized for efficient data retrieval based on specific use cases and requirements. The PDSes can be configured to store specific types of data, such as customer data, product data, finance data, and more. These PDS serve as repositories for canonized and/or standardized data, ensuring data consistency and integrity across the system.

In some embodiments, RTDM module 600 implements a data replication mechanism to capture real-time changes from multiple data sources, including transactional systems like ERPs (e.g., SAP, Impulse, META, I-SCALA). The captured data can then be processed and standardized on-the-fly, transforming it into a standardized format suitable for analysis and integration. This process ensures that the data is readily available and current within the data mesh, facilitating real-time insights and decision-making.

More specifically, data layer 620 within the RTDM module 600 can be configured as a powerful and flexible foundation for managing and processing data within the distribution ecosystem. In some embodiments, data layer 620 can encompasses a highly scalable and robust data lake, which can be referred to as data lake 622, along with a set of purposive datastores (PDSes), which can be denoted as PDSes 624.1 to 624.N. These components integrate to ensure efficient data management, standardization, and real-time availability.

Data layer 620 incudes data lake 622, a state-of-the-art storage and processing infrastructure configured to handle the ever-increasing volume, variety, and velocity of data generated within the supply chain. Built upon a scalable distributed file system, such as Apache Hadoop Distributed File System (HDFS) or Amazon S3, the data lake provides a unified and scalable platform for storing both structured and unstructured data. Leveraging the elasticity and fault-tolerance of cloud-based storage, data lake 622 can accommodate the influx of data from diverse sources.

Associated with data lake 622, a population of purposive datastores, PDSes 624.1 to 624.N, can be employed. Each PDS 624 can function as a purpose-built repository optimized for storing and retrieving specific types of data relevant to the supply chain domain. In some non-limiting examples, PDS 624.1 may be dedicated to customer data, storing information such as customer profiles, preferences, and transaction history. PDS 624.2 may be focused on product data, encompassing details about SKU codes, descriptions, pricing, and inventory levels. These purposive datastores allow for efficient data retrieval, analysis, and processing, catering to the diverse needs of supply chain users.

To ensure real-time data synchronization, data layer 620 can be configured to employ one or more change data capture (CDC) mechanisms. These CDC mechanisms can be integrated with the transactional systems, such as legacy ERPs like SAP, Impulse, META, and I-SCALA, as well as other enterprise-wide systems. CDC constantly monitors these systems for any updates, modifications, or new transactions and captures them in real-time. By capturing these changes, data layer 620 ensures that the data within the data lake 622 and PDSes 624 remains current, providing users with real-time insights into the distribution ecosystem.

In some embodiments, data layer 620 can be implemented to facilitate integration with existing enterprise systems using one or more frameworks, such as .NET or Java, ensuring compatibility with a wide range of existing systems and providing flexibility for customization and extensibility. For example, data layer 620 can utilize the Java technology stack, including frameworks like Spring and Hibernate, to facilitate integration with a system of records having a population of diverse ERP systems and other enterprise-wide solutions. This can facilitate smooth data exchange, process automation, and end-to-end visibility across the supply chain.

In terms of data processing and analytics, data layer 620 can use the capabilities of distributed computing frameworks, such as Apache Spark or Apache Flink in some non-limiting examples. These frameworks can enable parallel processing and distributed computing across large-scale datasets stored in the data lake and PDSes. By leveraging these frameworks, supply chain users can perform complex analytical tasks, apply machine learning algorithms, and derive valuable insights from the data. For instance, data layer 620 can use Apache Spark's machine learning libraries to develop predictive models for demand forecasting, optimize inventory levels, and identify potential supply chain risks.

In some embodiments, data layer 620 can incorporate robust data governance and security measures. Fine-grained access control mechanisms and authentication protocols ensure that only authorized users can access and modify the data within the data lake and PDSes. Data encryption techniques, both at rest and in transit, safeguard the sensitive supply chain information against unauthorized access. Additionally, data layer 620 can implement data lineage and audit trail mechanisms, allowing users to trace the origin and history of data, ensuring data integrity and compliance with regulatory requirements.

In some embodiments, data layer 620 can be deployed in a cloud-native environment, leveraging containerization technologies such as Docker and orchestration frameworks like Kubernetes. This approach ensures scalability, resilience, and efficient resource allocation. For example, data layer 620 can be deployed on cloud infrastructure provided by AWS, Azure, or Google Cloud, utilizing their managed services and scalable storage options. This allows for scaling of resources based on demand, minimizing operational overhead and providing an elastic infrastructure for managing supply chain data.

Data layer 620 of RTDM module 600 can incorporate a highly scalable data lake, data lake 622, along with purpose-built PDSes, PDSes 624.1 to 624.N, and employing CDC mechanisms, data layer 620 ensures efficient data management, standardization, and real-time availability. In a non-limiting example, Data Layer 620 can be implemented utilizing any appropriate technology, such as .NET or Java, and/or distributed computing frameworks like Apache Spark, enables powerful data processing, advanced analytics, and machine learning capabilities. With robust data governance and security measures, data layer 620 ensures data integrity, confidentiality, and compliance. Through its scalable infrastructure and integration with existing systems, data layer 620 enables supply chain users to make data-driven decisions, optimize operations, and drive business success in the dynamic and complex distribution environment.

RTDM module 600 can include an AI module 630 configured to implement one or more algorithms and machine learning models to analyze the stored data in data layer 620 and derive meaningful insights. In some non-limiting examples, AI module 630 can apply predictive analytics, anomaly detection, and optimization algorithms to identify patterns, trends, and potential risks within the supply chain. AI module 630 can continuously learns from new data inputs and adapts its models to provide accurate and current insights. AI module 630 can generate predictions, recommendations, and alerts and publish such insights to dedicated data feeds.

Data engine layer 640 comprises a set of interconnected systems responsible for data ingestion, processing, transformation, and integration. Data engine layer 640 of RTDM module 600 can include a collection of headless engines 640.1 to 640.N that operate autonomously. These engines represent distinct functionalities within the system and can include, for example, one or more recommendation engines, insights engines, and subscription management engines. Engines 640.1 to 640.N can use the standardized data stored in the data mesh to deliver specific business logic and services. Each engine can be configured to be pluggable, allowing for flexibility and future expansion of the module's capabilities. Exemplary engines are shorn in FIG. 5, which are not intended to be limiting. Any additional headless engine can be included in data engine layer 640 or in other exemplary layers of the disclosed system.

These systems can be configured to receive data from multiple sources, such as transactional systems, IoT devices, and external data providers. The data ingestion process involves extracting data from these sources and transforming it into a standardized format. Data processing algorithms can be applied to cleanse, aggregate, and enrich the data, making it ready for further analysis and integration.

Further, to facilitate integration and access to RTDM module 600, a data distribution mechanism can be employed. Data distribution mechanism 645 can be configured to include one or more APIs to facilitate distribution of data from the data mesh and engines to various endpoints, including user interfaces, micro front ends, and external systems.

Experience layer 650 focuses on delivering an intuitive and user-friendly interface for interacting with supply chain data. Experience layer 650 can include data visualization tools, interactive dashboards, and user-centric functionalities. Through this layer, users can retrieve and analyze real-time data related to various supply chain metrics such as inventory levels, sales performance, and customer demand. The user experience layer supports personalized data feeds, allowing users to customize their views and receive relevant updates based on their roles and responsibilities. Users can subscribe to specific data updates, such as inventory changes, pricing updates, or new SKU notifications, tailored to their preferences and roles.

Thereby, in some embodiments, RTDM module 600 for supply chain and distribution management can include an integration with a system of records and include one or more of a data layer with a data mesh and purposive datastores, an AI component, a data engine layer, and a user experience layer. These components work together to provide users with intuitive access to real-time supply chain data, efficient data processing and analysis, and integration with existing enterprise systems. The technical feeds and retrievals within the module ensure that users can retrieve relevant, current information and insights to make informed decisions and optimize supply chain operations. Accordingly, RTDM module 600 facilitates supply chain and distribution management by providing a scalable, real-time data management solution. Its innovative architecture allows for the rich integration of disparate data sources, efficient data standardization, and advanced analytics capabilities. The module's ability to replicate and standardize data from diverse ERPs, while maintaining auditable and repeatable transactions, provides a distinct advantage in enabling a unified view for vendors, resellers, customers, end customers, and other entities in a distribution system, including an IT distribution system.

### PERSONALIZED BUNDLING BASED ON PERSONAS

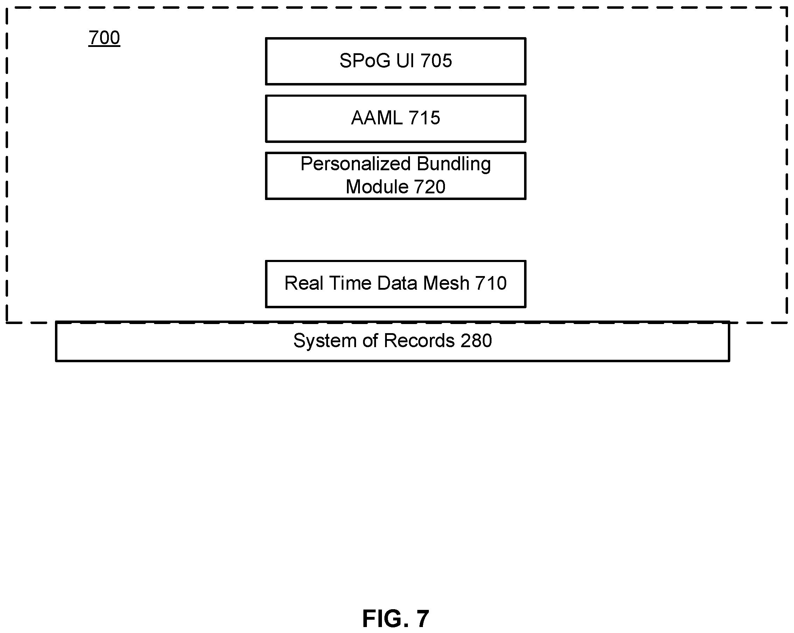

In an embodiment, FIG. 7 depicts System 700 for personalized bundling based on specific user personas. System 700 includes the Real-Time Data Mesh 710, Single Pane of Glass User Interface (SPoG UI) 705, Advanced Analytics and Machine-Learning (AAML) Module 715, and the Personalized Bundling Module 720. System 700 provides a framework for real-time data processing and analysis, underlining its adaptability to changing technology and user demands. System 700 implements AI and machine learning processes to dynamically curate bundles that personalized to users' current needs but also scalable to accommodate future technological advancements. System 700 can be implemented to integrate hardware, software, and subscription services into cohesive solutions, offering users an intuitive platform to access personalized technology solutions. The integration complies with market adaptations increasingly focused on delivering value through complete solutions rather than individual products, enhancing user engagement and satisfaction through a solution-centric distribution model.

RTDM 710 aggregates and standardizes real-time data from various sources, ensuring that the Personalized Bundling Module 720 operates with the most current and relevant information. This includes data on product availability, user behavior patterns, and market trends. RTDM 710 provides a centralized, unified data hub, aggregating and standardizing data from multiple sources including ERPs, CRM systems, and market intelligence. It employs a combination of data warehousing and data lakes to manage structured and unstructured data. RTDM 710 uses ETL processes and data normalization techniques to ensure data uniformity and accessibility. This standardized data enables the operation of Personalized Bundling Module 720, providing the necessary inputs for accurate and efficient bundle generation. RTDM 710's maintains data integrity and relevance, enabling and facilitating the automated processes of personalized bundling.

In an embodiment, the Personalized Bundling Module 720 includes various functional sub-components designed for the personalized bundling process. These components closely interact with other system components, namely the Single Pane of Glass User Interface (SPoG UI) 705, the Real-Time Data Mesh (RTDM) 710, and the Advanced Analytics and Machine Learning (AAML) Module 715.

Personalized Bundling Module 720 is dedicated to creating customized product and service bundles. It contains sub-routines and algorithms for tasks such as analyzing user behavior, generating personalized product combinations, and applying dynamic pricing. When a user initiates a bundling action from the SPoG UI 705, the request is routed to the Personalized Bundling Module 720 within the AAML 715. The module processes the request, interacts with the Real-Time Data Mesh 710 for the required data, and executes the bundling configuration. The results are then displayed on the SPoG UI 705. Additionally, the Personalized Bundling Module 720 includes a logging mechanism for tracking all configuration changes and user interactions for auditing and optimization purposes.

Personalized Bundling Module 720 employs a combination of machine learning models and heuristic algorithms for bundle recommendation and pricing. It uses decision tree models for determining optimal product combinations and linear regression for dynamic pricing strategies. The module incorporates real-time error-checking algorithms, ensuring the accuracy and feasibility of each bundle. It dynamically adjusts recommendations based on user feedback and market trends, utilizing a feedback mechanism to continually improve its bundling accuracy. This module is essential for delivering customized, relevant, and error-free bundles to users, enhancing customer satisfaction and operational efficiency.

Personalized Bundling Module 720 can employ AAML Module 715 to filter and discern relevant data from irrelevant data in real-time. Personalized Bundling Module 720 can thereby employ advanced filtering algorithms and noise reduction techniques to process vast amounts of data received from the RTDM 710. In one non-limiting example, it may distinguish between vital signals, such as emerging market trends and user engagement metrics, and noise, such as outdated or irrelevant product information. By prioritizing data that accurately reflects current market dynamics and user preferences, Personalized Bundling Module 720 can recognize and recommend potential bundles that are customized to a user's immediate needs and also aligned with offerings and trends that improve conversion. This optimization engine integrates with the Advanced Analytics and Machine Learning (AAML) Module 715, leveraging both historical and real-time data to continuously improve its filtering algorithms and enhance the precision of bundle recommendations

Personalized Bundling Module 720 can integrate critical sub-components such as the Bundle Recommendation Engine 720.1, which guides users through the product selection process based on their profiles and preferences. Bundle Recommendation Engine 720.1 can be activated when a user explores products in the SPoG UI 705 and fetch real-time data from the RTDM 710, ensuring that all recommendations are based on current availability and user preferences. This engine can use decision tree algorithms to offer compatible and complementary choices, optimizing the bundling process.

Another sub-component, the Bundle Composition Generator 720.2, assembles a detailed list of products and services for each personalized bundle. It matches user preferences and market trends against real-time inventory data from the RTDM 710, using RESTful APIs or similar data connectors. This component ensures that each bundle is optimally configured to meet user needs and market demands.

Personalized Pricing Adjuster 720.3 dynamically calculates the overall cost for personalized bundles. It fetches real-time pricing data from the RTDM 710 and applies user-specific discounts or promotional offers. This component ensures that the pricing of each bundle is competitive and tailored to individual user profiles.

Personalized Bundling Module 720 also includes an Error-Check Integrator 720.4. This component validates all user selections and bundle configurations using algorithms stored in the AAML 715. It ensures that each personalized bundle is free from errors and inconsistencies before finalization.

Personalized Bundling Module 720 supports JSON and XML data formats for bundle generation and customization. This flexibility allows it to cater to a wide range of user preferences and system requirements.

AAML Module 715 operates like the central processing unit for the personalized bundling process. It contains intelligent rules and algorithms designed for specific tasks in the bundling process, such as analyzing user behavior, optimizing product combinations, and applying dynamic pricing. AAML Module 715 can utilize analytics tools for big data processing and for deep learning. AAML Module 715 can conduct sentiment analysis, trend forecasting, and behavioral analytics to understand and anticipate user needs. AAML Module 715 incorporates and trains machine learning algorithms based on historical data sets to identify patterns and make predictive recommendations. It adapts its algorithms based on continuous feedback loops, refining its predictive accuracy over time. This module performs functions corresponding to the automated bundling process, ensuring that recommendations are tailored to individual user profiles and preferences.

Thereby, System 700 is configured to integrate data from multiple sources into a unified interface via the SPoG UI 705, automate various tasks in the personalized bundling process via the AAML 715, and maintain a real-time, standardized data repository via the RTDM 710. This architecture enables efficient, accurate, and user-specific bundling processes, enhancing the overall customer experience in the IT distribution industry.

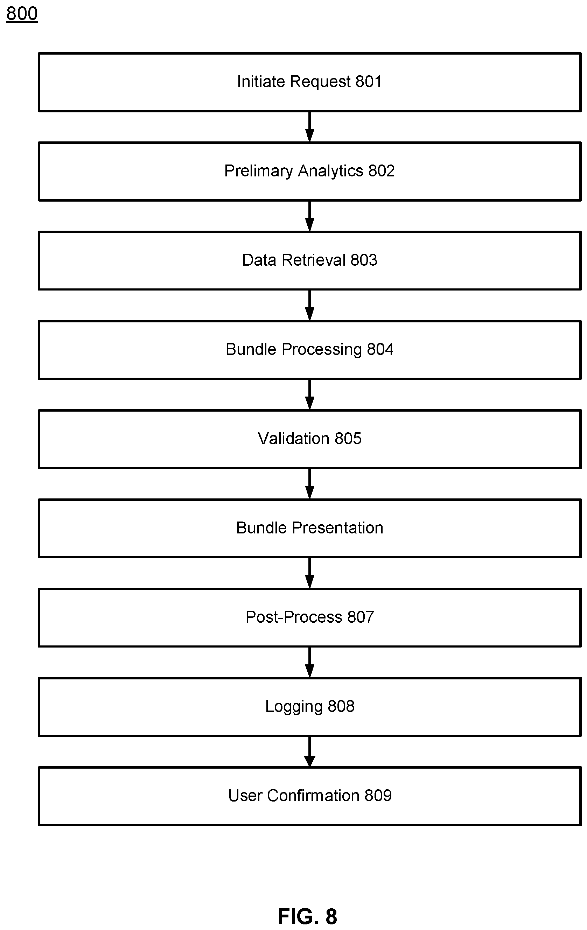

FIG. 8 depicts a flow diagram of method 800 for personalized bundling processes, according to embodiments of the present disclosure. This flow details operations from initiation to completion, focusing on the Personalized Bundling Module 720 in System 700.

At Operation 801, the user initiates the bundling process by interacting with the Single Pane of Glass User Interface (SPoG UI) 705. Operation 801 includes collection of user inputs such as product preferences and specific requirements. SPoG UI 705 then communicates with the Advanced Analytics and Machine Learning (AAML) Module 715 to process these inputs.

At Operation 802, the AAML Module 715 conducts preliminary analytics to discern the user's specific needs for bundling. Algorithms within AAML 715 analyze the user's input to determine the optimal bundle recommendations, taking into account factors such as past purchasing behavior and current market trends.

At Operation 803, the request is forwarded to the Real-Time Data Mesh (RTDM) 710. RTDM 710 retrieves data pertinent to the user's preferences, including real-time inventory status and related product information, utilizing RESTful APIs for these operations.

At Operation 804, the Personalized Bundling Module 720 processes the request. This module, utilizing components like the Bundle Recommendation Engine 720.1 and Bundle Composition Generator 720.2, creates a customized bundle. The Bundle Recommendation Engine 720.1 employs algorithms to select products and services that align with the user's preferences, while the Bundle Composition Generator 720.2 assembles these into a coherent bundle.

Operation 804 can include Personalized Bundling Module 720 using filtering and/or pattern recognition processes to refine a proposed bundle. The operation can leverage the advanced filtering algorithms and noise reduction techniques to evaluate a preliminary bundle configuration against current market trends and user-specific data, ensuring the inclusion of only the most relevant and compatible products and services. Personalized Bundling Module 720 processes aggregated data from RTDM 710, identifying and prioritizing key signals, such as user preference trends, compatibility of selected products, and real-time market data, while effectively filtering out irrelevant information. This optimization ensures that each bundle is not only tailored to the specific needs and preferences of the user but also reflects the latest available technology solutions, thereby enhancing the value and appeal of the personalized bundle.

In some embodiments, Personalized Bundling Module 720 can cross-reference the optimized bundle against a set of predefined rules and criteria to ensure compatibility and compliance with industry standards. In a non-limiting example, this may include checking for the latest versions of software, hardware compatibility, and service agreement terms, ensuring that the bundle meets all necessary requirements for a seamless user experience. Such adjustment can ensure that a final bundle recommendation is personalized and relevant for immediate implementation by associated users.

At Operation 805, a validation step by the Error-Check Integrator 720.4 ensures the accuracy and feasibility of the proposed bundle. This integrator uses algorithms stored in the AAML 715 to verify the integrity of the bundle.

At Operation 806, the personalized bundle, including detailed components and pricing, is presented back to the user on the SPoG UI 705 for review and confirmation.

At Operation 807, machine learning models within the Personalized Bundling Module 720 conduct a post-process analysis. These models, using techniques like predictive analytics, refine the bundling process, enhancing future recommendations based on evolving user data and market conditions.

At Operation 808, a logging mechanism within the Personalized Bundling Module 720 records transaction details, including user preferences and the final bundle composition, for future analysis and continuous improvement of the system.

At Operation 809, the user reviews and confirms or modifies the bundle presented on the SPoG UI 705. Upon user confirmation, the personalized bundling process is completed.

This operational flow integrates SPoG UI 705, RTDM 710, AAML 715, and the Personalized Bundling Module 720, each performing specific functions to automate and optimize the personalized bundling process. Alternative embodiments could include variations in machine learning algorithms, data retrieval methods, and user interaction interfaces, providing adaptability and scalability to System 700.

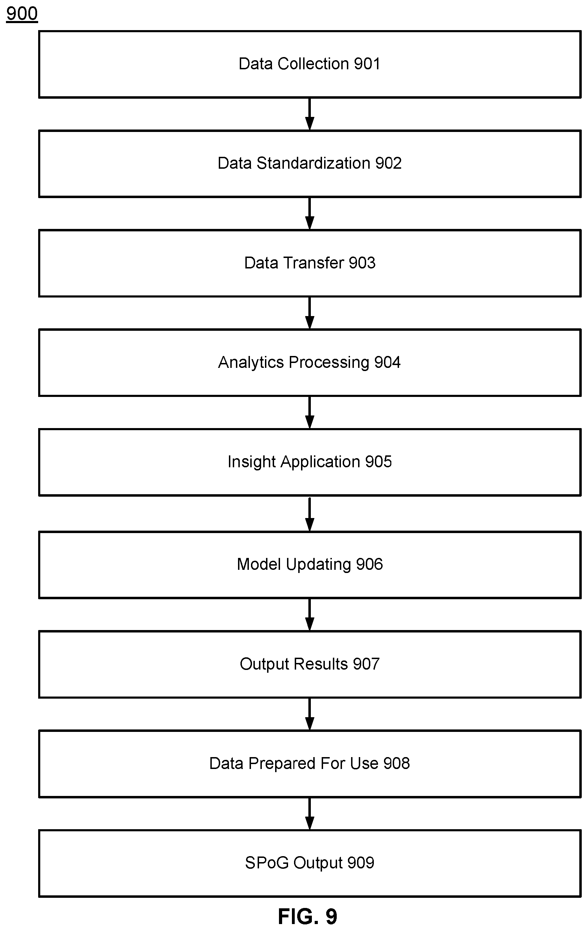

FIG. 9 illustrates a flow diagram of method 900 for data processing and analytics, for example, utilizing system 700 including Real-Time Data Mesh 710 and the Advanced Analytics and Machine Learning (AAML) Module 715. Method 900 illustrates the sequence of operations involved in aggregating, transforming, and utilizing data for real-time analytics and insight generation.

At Operation 901, the process begins with data collection. Various data sources, such as enterprise resource planning (ERP) systems, vendor platforms, third-party databases, and direct user inputs, feed into the Real-Time Data Mesh 710. This step involves aggregating diverse data types, including inventory levels, user behavior data, market trends, and product information.

At Operation 902, the aggregated data undergoes standardization and transformation within the Real-Time Data Mesh 710. This includes aligning data formats, normalizing measurements, and resolving data discrepancies. The RTDM 710 ensures that the data is processed into a uniform format suitable for subsequent analytics.

At Operation 903, the standardized data is transferred from the RTDM 710 to the AAML Module 715. This transfer is facilitated through secure and efficient data communication protocols, ensuring the integrity and reliability of the data.

At Operation 904, the AAML Module 715 begins its analytics process. Advanced algorithms and machine learning models within this module analyze the incoming data to extract meaningful insights. This includes identifying patterns, predicting market trends, and understanding user behavior.

Given the diverse nature of the data (user behaviors, market trends, inventory data), some embodiments can include performing segmentation at operation 904 based on both user characteristics (demographics, purchase history) and product categories. This segmentation can be performed to enable or improve targeted and relevant analysis. In some embodiments, operation 904 can include predictive modeling, wherein AAML Module 715 can implement one or more statistical methods (such as regression analysis for sales forecasting, for example) and/or machine learning techniques (such as neural networks for complex pattern recognition and demand prediction). As described herein, these models can be continuously refined with incoming data to improve their accuracy.

In some embodiments, operation 904 can include sentiment analysis, such as processing customer feedback and market sentiment data using NLP models trained on large text corpora, for example. Sentiment analysis can enable an understanding of customer satisfaction and market perceptions for personalizing the offerings in the Personalized Bundling Module 720.

At Operation 905, the AAML Module 715 uses the derived insights to inform various functions within System 700. Specifically, these insights contribute to the operational efficiency of the Personalized Bundling Module 720. In some embodiments, predictive analytics and trend analysis can enhance the accuracy and relevance of product bundle recommendations.

In some embodiments, Operation 905 can include generation by Personalized Bundling Module 720 and/or retrieval of detailed customer profiles based on behavioral analytics to tailor product and service bundles. Customization can utilize deep insights such as customer lifestyle indicators, past purchasing patterns, time-sensitive factors like recent browsing history, and the like. In a non-limiting example, if analytics indicate a customer's growing interest in sustainable products, the bundling module adjusts its algorithms to prioritize eco-friendly options in their product bundles.

In some embodiments, Operation 905 can include translating data-driven insights and analysis into practical implementations by AAML Module 715 to create tailored product and service bundles applicable to different user personas. Insights generated by AAML Module 715 based on patterns, trends, and the like, identified at Operation 904. Operation 905 can include leveraging this information to dynamically adjust product and bundle offerings in real-time. For example, if AAML Module 715 detects a surge in a particular product or category, the Personalized Bundling Module 720 can immediately incorporate such trends into bundling options. Real-time integration ensures that the bundling recommendations remain relevant and meaningful to users, enhancing user engagement.

In some embodiments, Operation 905 can include Personalized Bundling Module 720 implementing dynamic pricing models based on insights into market demand and/or customer price sensitivity. For example, Operation 905 can include adjusting prices in response to various factors such as inventory levels, competitor pricing, and customer willingness to pay. Personalized Bundling Module 720 may, for example, use machine learning models via AAML Module 715 to predict an optimal price point for each bundle, maximizing both revenue and customer satisfaction.

Secondly, trend analysis conducted by AAML Module 715 informs the Personalized Bundling Module 720 about current market dynamics. This analysis includes evaluating user engagement metrics, purchase histories, and feedback patterns to identify what combinations of products or services are resonating with different customer segments. For instance, if a rising trend in eco-friendly products is detected among a certain user demographic, the Personalized Bundling Module 720 can adjust its algorithms to prioritize these products in its bundle recommendations for that segment.

Moreover, the insights from AAML Module 715 enable the Personalized Bundling Module 720 to fine-tune its recommendation engine. This involves adjusting the weightage of different user attributes and behaviors in its algorithm. For example, if the insights indicate a higher correlation between recent browsing history and purchasing decisions, the recommendation engine might be calibrated to give more weight to browsing data.

In addition to influencing product bundle recommendations, the insights from AAML Module 715 also guide dynamic pricing strategies within the Personalized Bundling Module 720. By understanding the price sensitivity of different user groups and market demand curves, the module can dynamically adjust prices for personalized bundles, enhancing sales potential and customer satisfaction.

Furthermore, these insights contribute to improving the user interface and experience of the SPoG UI 705. By understanding user preferences and behaviors, the UI can be optimized to present the most relevant information and options to the users, enhancing their engagement and simplifying their decision-making process.

In summary, Operation 905 within System 700 is a pivotal process where the analytical outcomes of the AAML Module 715 are translated into actionable strategies and operational enhancements, particularly for the Personalized Bundling Module 720. This operation ensures that the system remains agile, responsive, and aligned with the evolving needs and behaviors of its users.

At Operation 906, the AAML Module 715 continuously updates its algorithms and models based on the latest data. This iterative learning process ensures that the analytics component of the system remains dynamic and adapts to changing market conditions and user needs.

At Operation 907, the AAML Module 715 communicates the analytics results back to the Real-Time Data Mesh 710. This step involves updating the RTDM 710 with new insights, ensuring that the data mesh always contains the most current and processed information.

At Operation 908, the Real-Time Data Mesh 710, now updated with the latest insights, becomes ready to support subsequent data requests from various components of System 700. This ensures a continuous cycle of data processing and utilization, maintaining the system's effectiveness and responsiveness.

At Operation 909, the SPoG UI 705 accesses the updated data from the RTDM 710. This enables the user interface to reflect the most current data and insights, enhancing user experience and decision-making capabilities.

Method 900, as depicted in FIG. 9, integrates the Real-Time Data Mesh 710 and the AAML Module 715 for efficient data processing, analytics, and utilization. This methodology ensures that the system is informed by real-time data and insights, significantly contributing to the personalized bundling process and overall system performance. Alternative embodiments of this method could include variations in data sources, analytical models, and communication protocols, offering adaptability and scalability to the data processing and analytics operations within System 700.

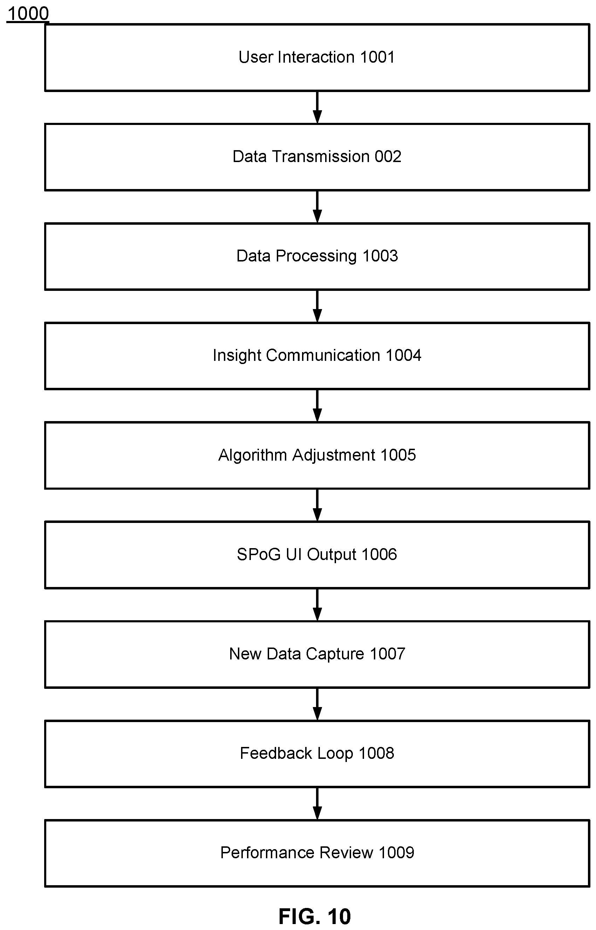

FIG. 10 depicts a flow diagram of method 1000 for user interaction and feedback in System 700. Method 1000 performs functions for incorporating user interactions to enable the system's continuous improvement and training.

At Operation 1001, the process begins with user inputs and selections made in the SPoG UI 705. Users interact with the interface by selecting products, indicating preferences, and providing feedback. Operation 1001 can include capturing real-time user behavior and preferences.

At Operation 1002, the collected user data from SPoG UI 705 is transmitted to the Real-Time Data Mesh 710. Here, the data is aggregated with other relevant information, such as current market trends and inventory status, preparing it for analysis.

At Operation 1003, the enriched data is forwarded from the RTDM 710 to the AAML Module 715. The AAML Module 715 then processes this data, using advanced analytics and machine learning algorithms to derive insights about user behavior, preferences, and feedback.

At Operation 1004, the AAML Module 715 communicates the processed insights to the Personalized Bundling Module 720. These insights include user satisfaction scores, bundle success rates, and other relevant metrics that are critical for refining the bundling process.

At Operation 1005, the Personalized Bundling Module 720 utilizes these insights to adjust and improve its bundling algorithms. This step involves updating bundle recommendations, personalization strategies, and user interaction protocols to better align with user expectations and market demands.

At Operation 1006, the updated bundling strategies and recommendations are implemented in the SPoG UI 705. Users interact with these updated interfaces and offerings, providing a continuous loop of interaction and feedback.

At Operation 1007, user responses to the updated strategies are again captured by the SPoG UI 705. This includes both explicit feedback, such as user ratings or comments, and implicit feedback, like click patterns and time spent on different pages.

At Operation 1008, this new set of user data is sent back to the RTDM 710 and subsequently to the AAML Module 715, perpetuating the cycle of feedback and improvement. This ongoing process ensures that the system adapts and evolves in response to user interactions.

At Operation 1009, performance metrics and user satisfaction scores are periodically reviewed to measure the effectiveness of the iterative improvements. This could involve analyzing trends over time, comparing user engagement metrics before and after changes, and evaluating overall system performance.

Method 1000, as illustrated in FIG. 10, establishes a comprehensive feedback loop within System 700, integrating user interaction data from the SPoG UI 705 with the analytical capabilities of the AAML Module 715 and the operational adjustments in the Personalized Bundling Module 720. This method underscores the importance of user feedback in the continuous enhancement of the system, ensuring that the system remains responsive and adaptive to user needs and market changes. By capturing and utilizing real-time user interactions, System 700 dynamically evolves, offering increasingly refined and personalized bundle recommendations. This ongoing feedback loop not only improves user satisfaction but also contributes to the overall efficiency and effectiveness of the bundling process.

Thereby, method 1000 establishes a process for continuous learning and adaptation within System 700. By effectively integrating user feedback into the system's operational framework, it ensures that the SPoG UI 705, the Real-Time Data Mesh 710, the AAML Module 715, and the Personalized Bundling Module 720 are consistently aligned with user preferences and market dynamics. This adaptive approach is key to maintaining the relevance and effectiveness of the personalized bundling process, ultimately enhancing user experience and system performance. Alternative embodiments of method 1000 could include variations in data collection methods, feedback processing algorithms, and user interaction interfaces, providing adaptability and scalability to the user interaction and feedback loop operations within System 700.

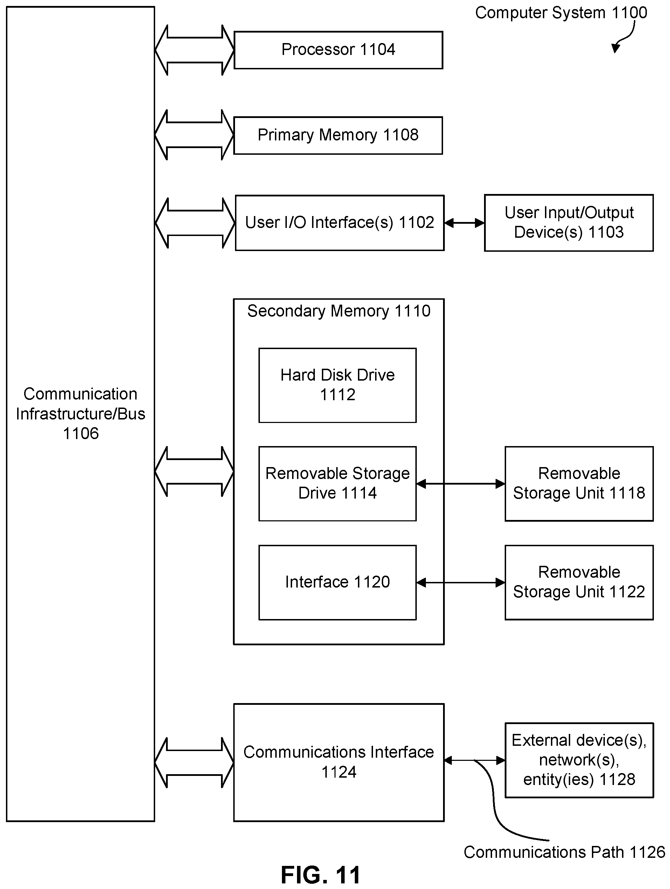

FIG. 11 depicts a block diagram of example components of device 1100. One or more computer systems 1100 may be used, for example, to implement any of the embodiments discussed herein, as well as combinations and sub-combinations thereof. Computer system 1100 may include one or more processors (also called central processing units, or CPUs), such as a processor 1104. Processor 1104 may be connected to a communication infrastructure or bus 1106.

Computer system 1100 may also include user input/output device(s) 1103, such as monitors, keyboards, pointing devices, etc., which may communicate with communication infrastructure 1106 through user input/output interface(s) 1102.

One or more processors 1104 may be a graphics processing unit (GPU). In an embodiment, a GPU may be a processor that can be a specialized electronic circuit configured to process mathematically intensive applications. The GPU may have a parallel structure that can be efficient for parallel processing of large blocks of data, such as mathematically intensive data common to computer graphics applications, images, videos, etc.

Computer system 1100 may also include a main or primary memory 1108, such as random access memory (RAM). Main memory 1108 may include one or more levels of cache. Main memory 1108 may have stored therein control logic (i.e., computer software) and/or data.

Computer system 1100 may also include one or more secondary storage devices or memory 1110. Secondary memory 1110 may include, for example, a hard disk drive 1112 and/or a removable storage device or drive 1114.

Removable storage drive 1114 may interact with a removable storage unit 1118. Removable storage unit 1118 may include a computer-usable or readable storage device having stored thereon computer software (control logic) and/or data. Removable storage unit 1118 may be program cartridge and cartridge interface (such as that found in video game devices), a removable memory chip (such as an EPROM or PROM) and associated socket, a memory stick and USB port, a memory card and associated memory card slot, and/or any other removable storage unit and associated interface. Removable storage drive 1114 may read from and/or write to removable storage unit 1118.

Secondary memory 1110 may include other means, devices, components, instrumentalities or other approaches for allowing computer programs and/or other instructions and/or data to be accessed by computer system 1100. Such means, devices, components, instrumentalities or other approaches may include, for example, a removable storage unit 1122 and an interface 1120. Examples of the removable storage unit 1122 and the interface 1120 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 1100 may further include a communication or network interface 1124. Communication interface 1124 may enable computer system 1100 to communicate and interact with any combination of external devices, external networks, external entities, etc. (individually and collectively referenced by reference number 1128). For example, communication interface 1124 may allow computer system 1100 to communicate with external or remote devices 1128 over communications path 1126, which may be wired and/or wireless (or a combination thereof), and which may include any combination of LANs, WANs, the Internet, etc. Control logic and/or data may be transmitted to and from computer system 1100 via communication path 1126.

Computer system 1100 may also be any of a personal digital assistant (PDA), desktop workstation, laptop or notebook computer, netbook, tablet, smartphone, smartwatch or other wearables, appliance, part of the Internet-of-Things, and/or embedded system, to name a few non-limiting examples, or any combination thereof.

Computer system 1100 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 1100 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 1100, main memory 1108, secondary memory 1110, and removable storage units 1118 and 1122, as well as tangible articles of manufacture embodying any combination of the foregoing. Such control logic, when executed by one or more data processing devices (such as computer system 1100), may cause such data processing devices to operate as described herein.

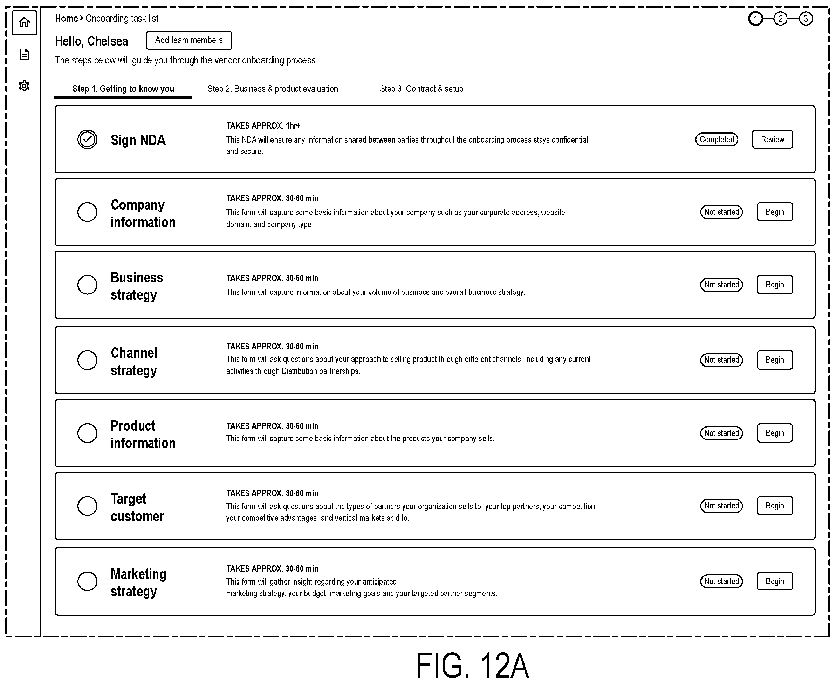

FIGS. 12A to 12Q depict various screens and functionalities of the SPoG UI related to vendor onboarding, partner dashboard, customer carts, order summary, SKU generation, order tracking, shipment tracking, subscription history, and subscription modifications. A detailed description of each figure is provided below:

FIG. 12A depicts a Vendor Onboarding Initiation screen that represents the initial step of the vendor onboarding process. It provides a form or interface where vendors can express their interest in joining the distribution ecosystem. Vendors can enter their basic information, such as company details, contact information, and product catalogs.

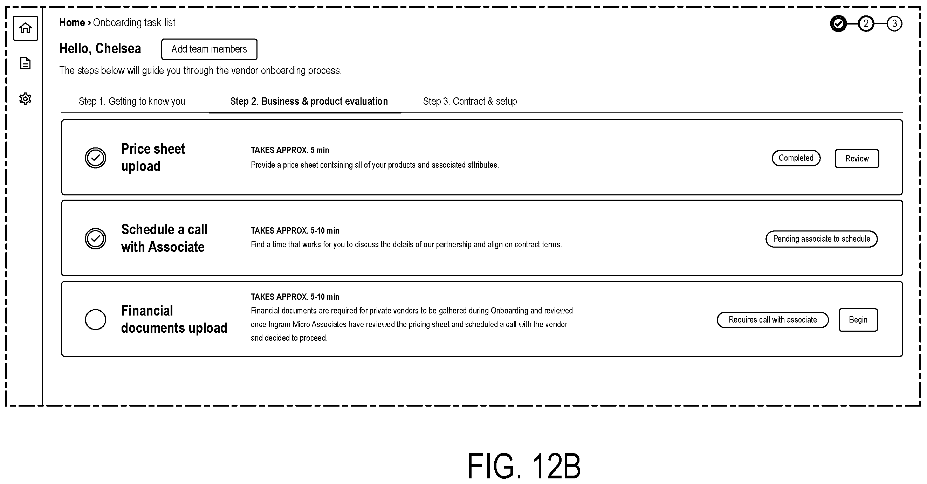

FIG. 12B depicts a Vendor Onboarding Guide that displays a step-by-step guide or checklist for vendors to follow during the onboarding process. It outlines the necessary tasks and requirements, ensuring that vendors have a clear understanding of the onboarding process and can progress smoothly.

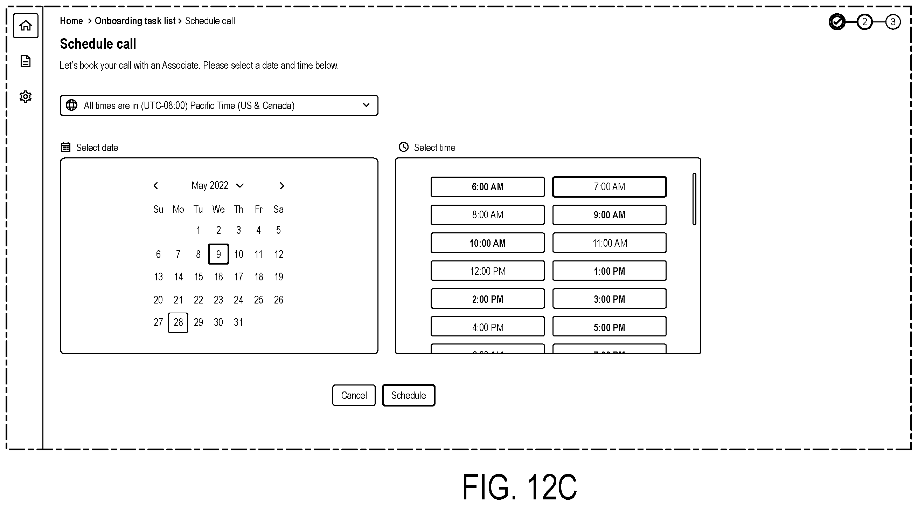

FIG. 12C depicts a Vendor Onboarding Call Scheduler that facilitates scheduling calls or meetings between vendors and platform associates or representatives responsible for guiding them through the onboarding process. Vendors can select suitable time slots or request a call, ensuring effective communication and assistance throughout the onboarding journey.

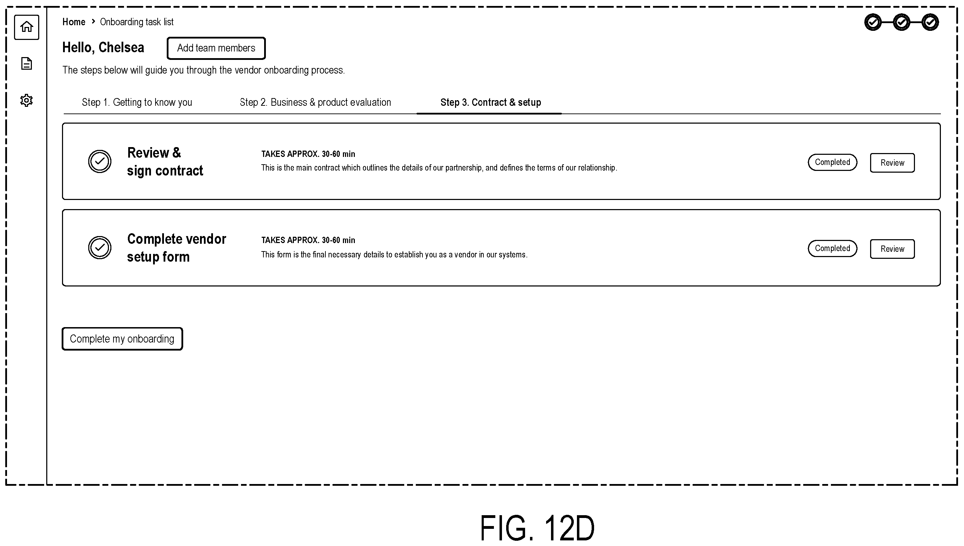

FIG. 12D depicts a Vendor Onboarding Task List that presents a comprehensive task list or dashboard that outlines the specific steps and actions required for successful vendor onboarding. It provides an overview of pending tasks, completed tasks, and upcoming deadlines, helping vendors track their progress and ensure timely completion of each onboarding task.

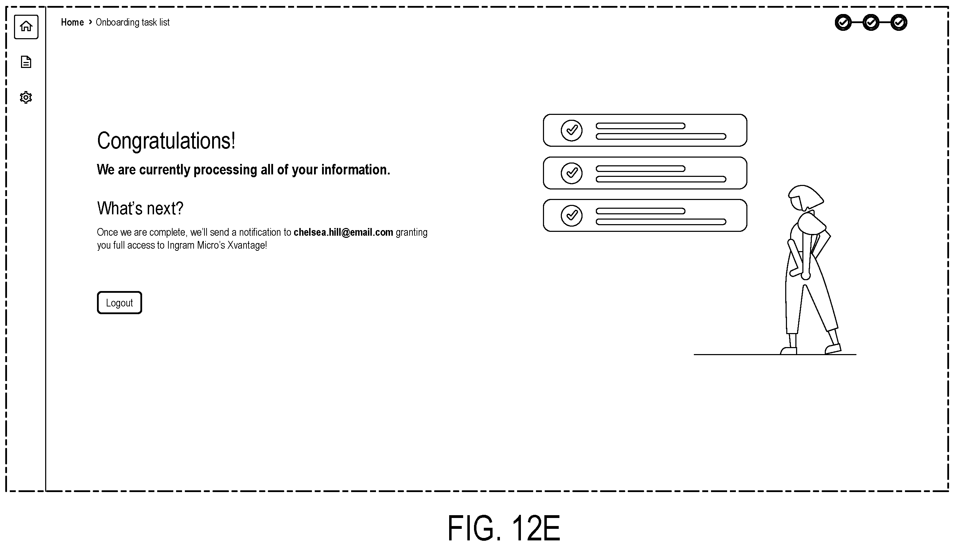

FIG. 12E depicts a Vendor Onboarding Completion Screen that confirms the successful completion of the vendor onboarding process. It may display a congratulatory message or summary of the completed tasks, indicating that the vendor is now officially onboarded into the distribution ecosystem.

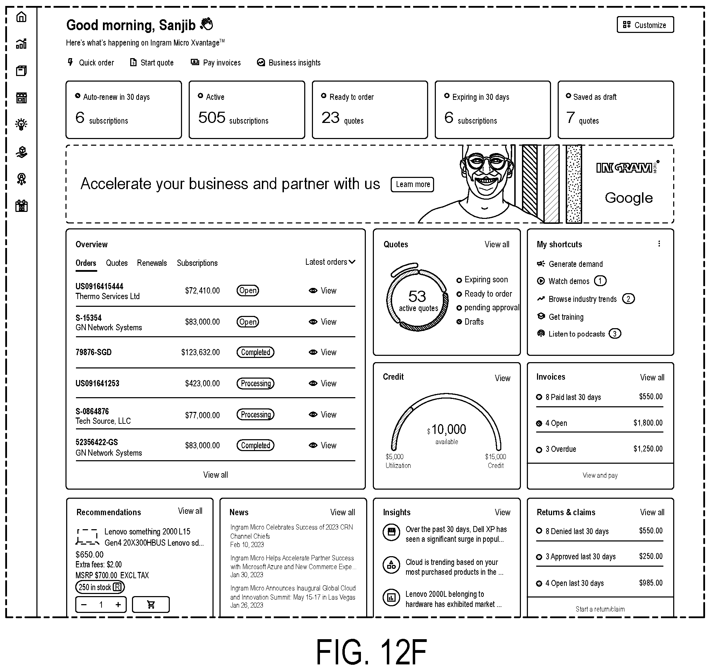

FIG. 12F depicts a Partner Dashboard that offers partners or users a centralized view of relevant information and metrics related to their partnership with the distribution ecosystem. It provides an overview of performance indicators, key data points, and actionable insights to facilitate effective collaboration and decision-making.

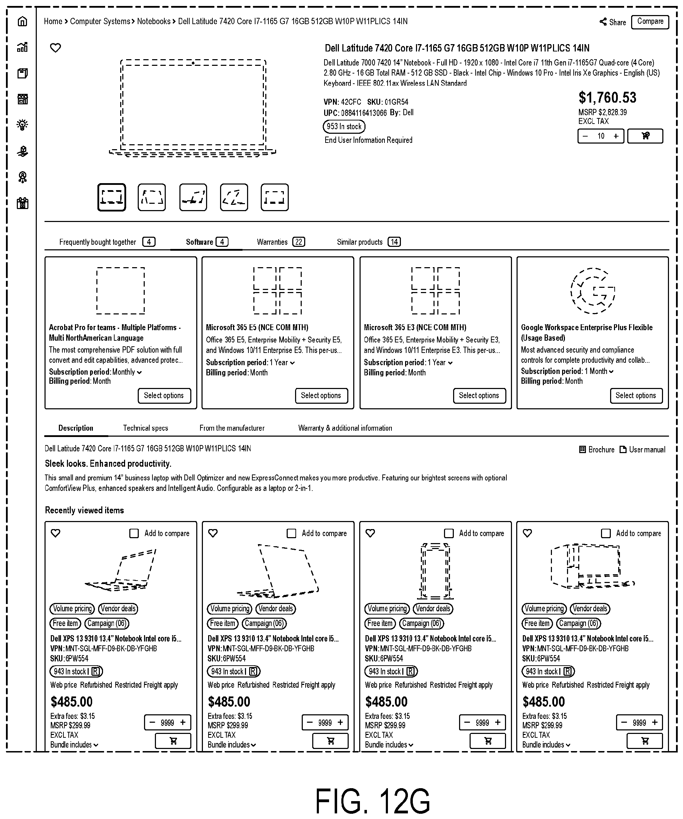

FIG. 12G depicts a Customer Product Cart that represents the customer's product cart, where they can add items they wish to purchase. It displays a list of selected products, quantities, prices, and other relevant details. Customers can review and modify their cart contents before proceeding to the checkout process.

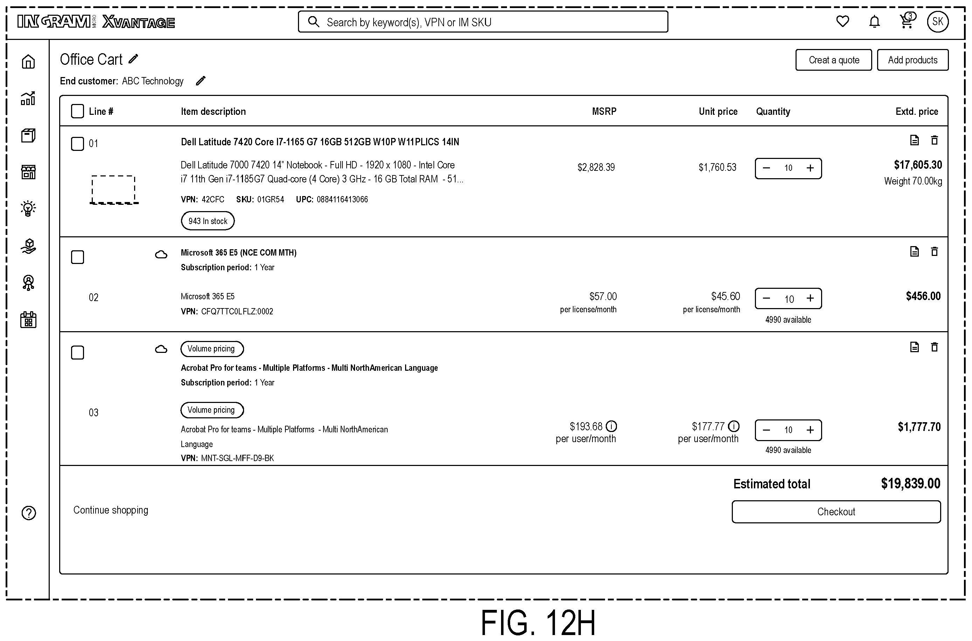

FIG. 12H depicts a Customer Subscription Cart that allows customers to manage their subscription-based purchases. It displays the selected subscription plans, pricing, and duration. Customers can review and modify their subscription details before finalizing their choices.

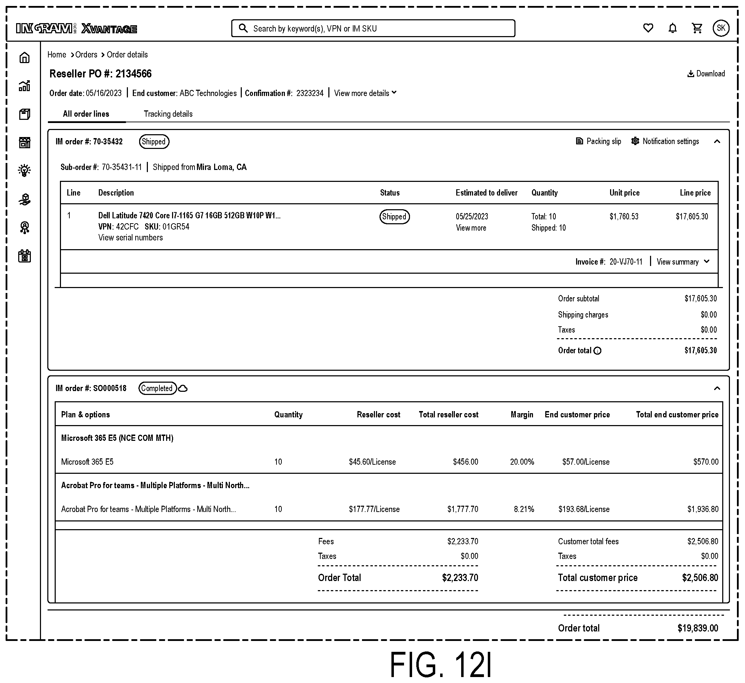

FIG. 12I depicts a Customer Order Summary that provides a summary of the customer's order, including details such as the products or subscriptions purchased, quantities, pricing, and any applied discounts or promotions. It allows customers to review their order before confirming the purchase.

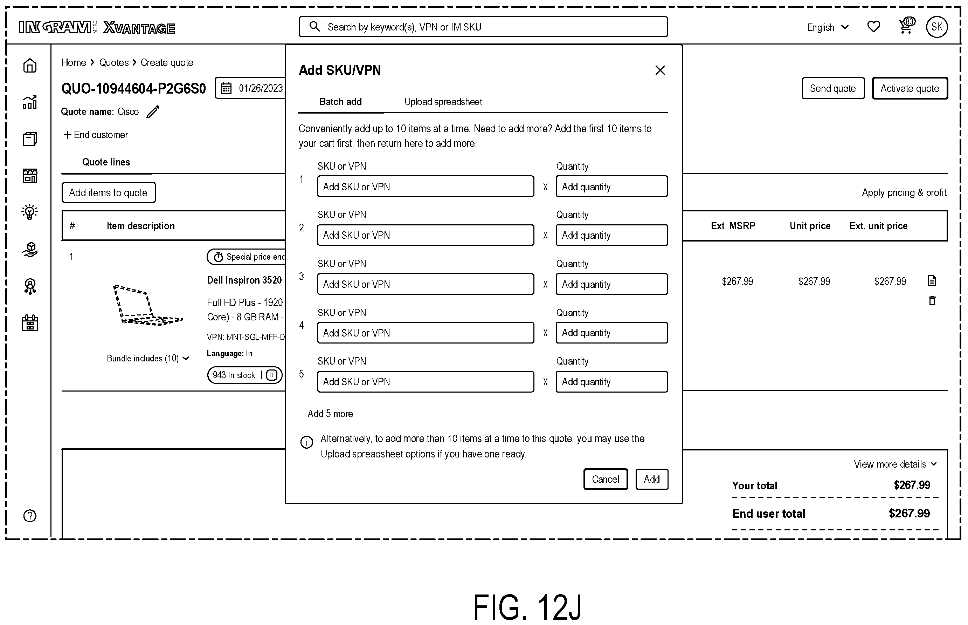

FIG. 12J depicts a Vendor SKU Generation screen for generating unique Stock Keeping Unit (SKU) codes for vendor products. It may include fields or options where vendors can specify the product details, attributes, and pricing, and the system automatically generates the corresponding SKU code.

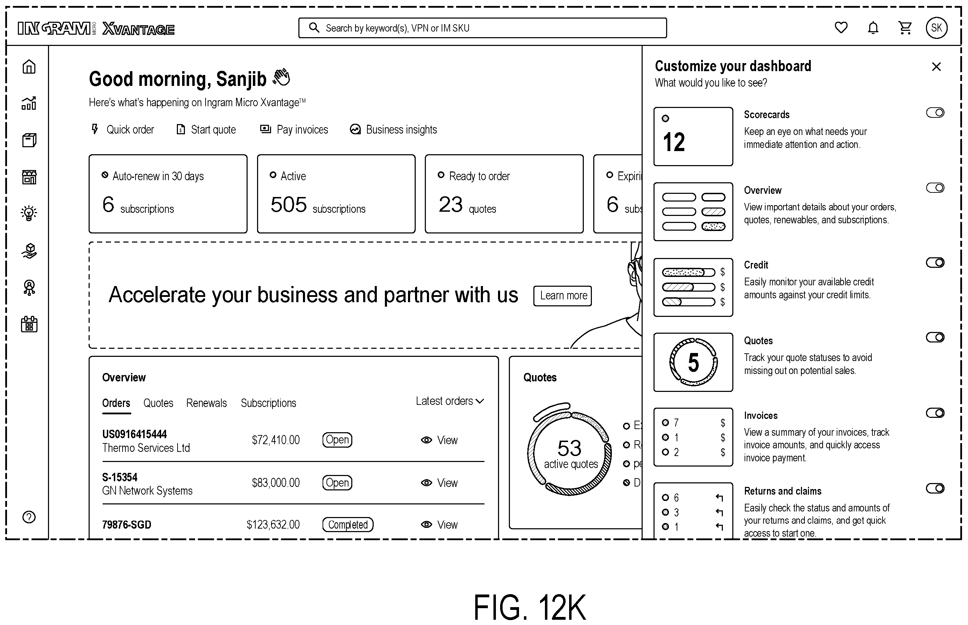

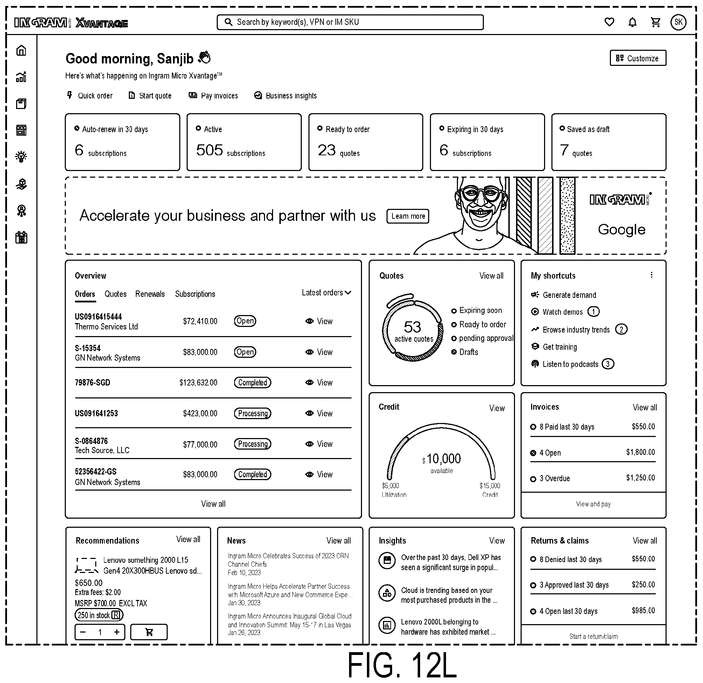

FIGS. 12K and 12L depicts Dashboard Order Summary to display summarized information about orders placed within the distribution ecosystem. They present key order details, such as order number, customer name, product or subscription information, quantity, and order status. The dashboard provides an overview of order activity, enabling users to track and manage orders efficiently.

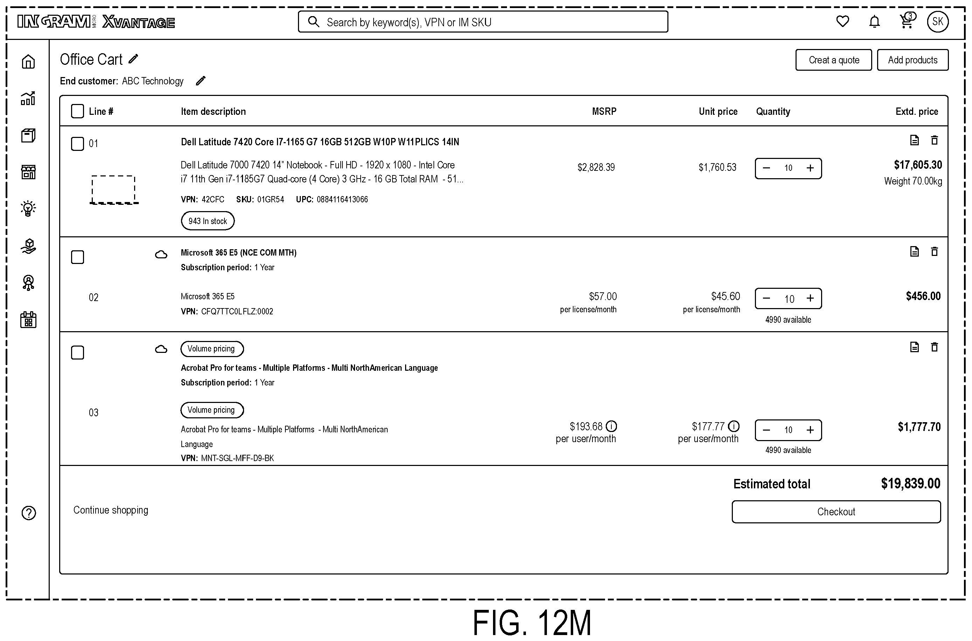

FIG. 12M depicts a Customer Subscription Cart that permits a customer to add, modify, or remove subscription plans. It can display a list of selected subscriptions, pricing, and renewal dates. Customers can manage their subscriptions and make changes according to their preferences and requirements.

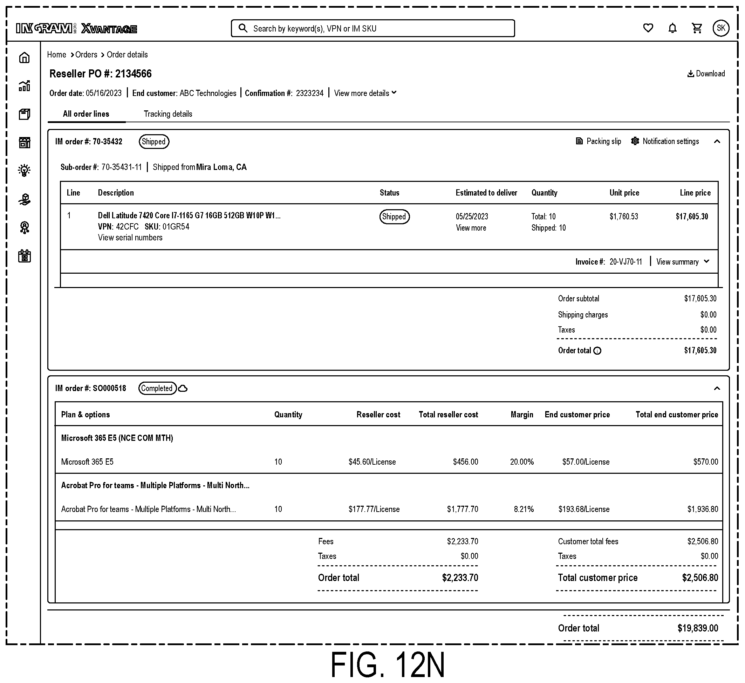

FIG. 12N depicts a Customer Order Tracking screen that enables customers to track the status and progress of their orders within the supply chain. It displays real-time updates on order fulfillment, including processing, packaging, and shipping. Customers can monitor the movement of their orders and anticipate delivery times.

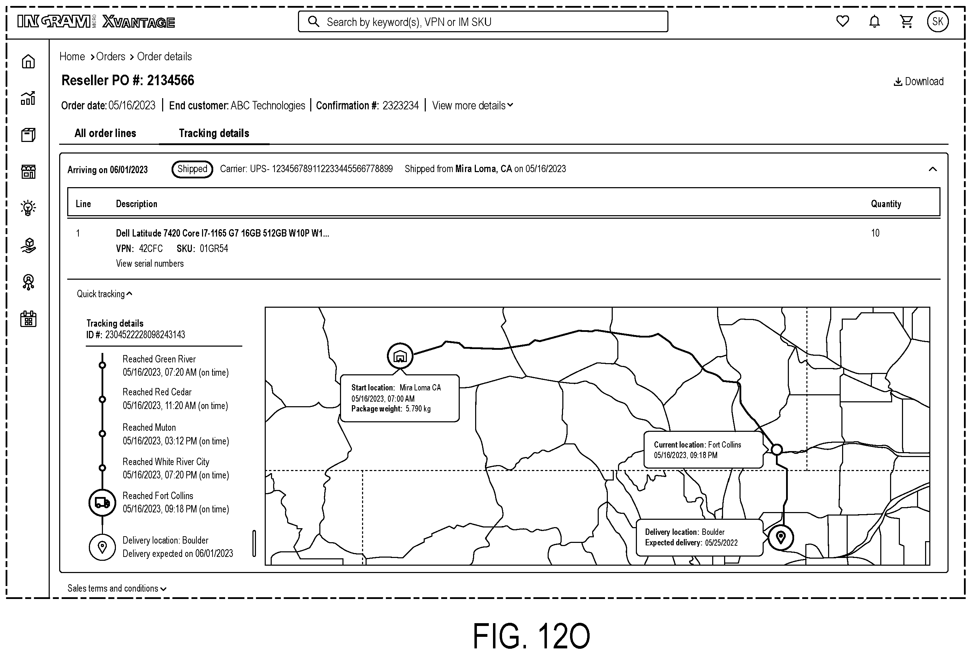

FIG. 12O depicts a Customer Shipment Tracking that provides customers with real-time tracking information about their shipments. It may include details such as the carrier, tracking number, current location, and estimated delivery date. Customers can stay informed about the whereabouts of their shipments.

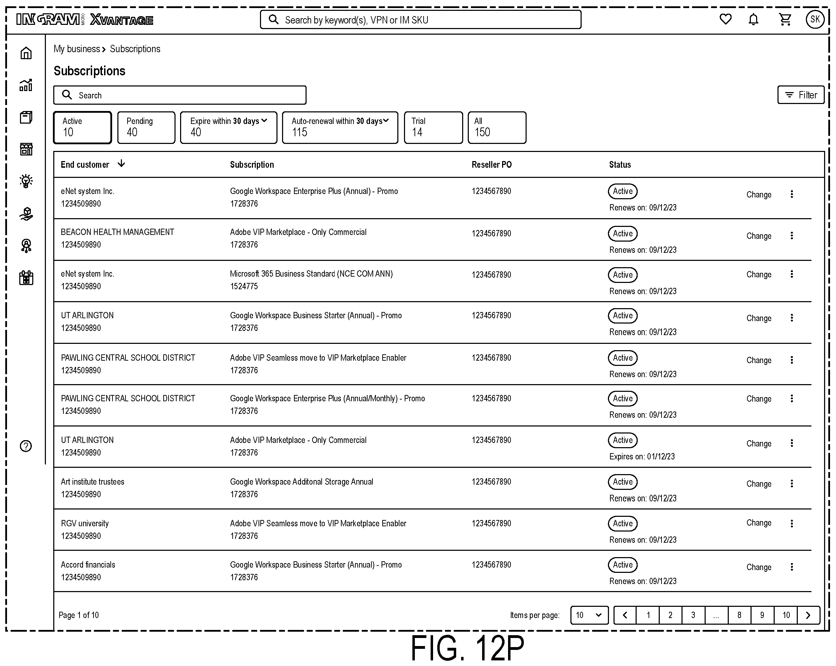

FIG. 12P depicts a Customer Subscription History, that presents a historical record of the customer's subscription activities. It displays a list of previous subscriptions, including the subscription plan, duration, and status. Customers can review their subscription history, track past payments, and refer to previous subscription details.

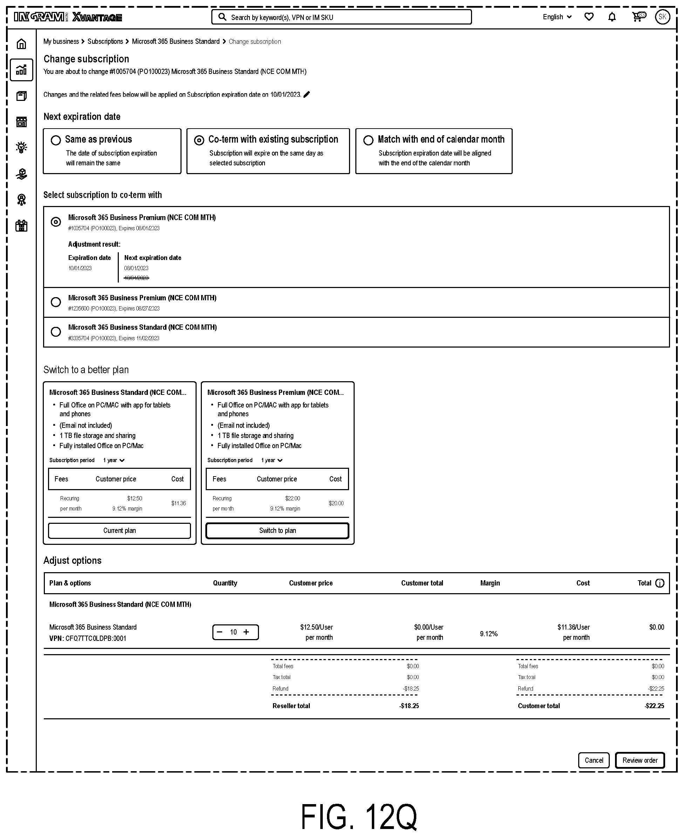

FIG. 12Q depicts a Customer Subscription Modifications dialog, that allows customers to modify their existing subscriptions. It offers options to upgrade or downgrade subscription plans, change billing details, or adjust other subscription-related preferences. Customers can manage their subscriptions according to their evolving needs or preferences.

The depicted UI screens are not limiting. In some embodiments the UI screens of FIGS. 12A to 12Q collectively represent the diverse functionalities and features offered by the SPoG UI, providing users with a comprehensive and user-friendly interface for vendor onboarding, partnership management, customer interaction, order management, subscription management, and tracking within the distribution ecosystem.

It is to be appreciated that the Detailed Description section, and not the Summary and Abstract sections, is intended to be used to interpret the claims. The Summary and Abstract sections may set forth one or more but not all exemplary embodiments of the present invention as contemplated by the inventor(s), and thus, are not intended to limit the present invention and the appended claims in any way.

The present invention has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention should not be limited by any of the above-described exemplary embodiments, but should be defined only in accordance with the following claims and their equivalents.

## Claims

1. A computerized method for executing a personalized bundling process, comprising:
receiving user inputs specifying preferences for product bundling;
retrieving, from a Real-Time Data Mesh (RTDM), real-time data relevant to the user's preferences;
analyzing, by an Advanced Analytics and Machine Learning (AAML) Module user inputs and market data;
generating one or more personalized bundle recommendations through a Personalized Bundling Module based on the analyzed user inputs and market data;
displaying the personalized bundle recommendations to the user via a Single Pane of Glass User Interface (SPoG UI);
receiving input from the user to perform completion of the personalized bundle;
transferring a personalized bundle order to a vendor system based on the completed personalized bundle;
executing the personalized bundle order by integrating data from the SPoG UI, RTDM, and vendor systems,
wherein the method is executed by a computer system with a unified platform that integrates data from multiple sources for real-time personalization.

2. The method of claim 1, further comprising validating the personalized bundle using rules and algorithms by the AAML Module to ensure relevance of the personalized bundling recommendations.

3. The method of claim 1, wherein the AAML Module utilizes dynamic machine learning algorithms to adapt the personalized bundling recommendations based on changing user preferences and market conditions.

4. The method of claim 1, wherein the RTDM is continuously updated with real-time inventory, user behavior data, and market trends.

5. The method of claim 1, further comprising generating one or more real-time reports related to the personalized bundling process, wherein the reports comprise user engagement metrics and/or personalized bundle success rates.

6. The method of claim 1, wherein the vendor system for fulfilling the personalized bundle is selected based on criteria including product availability and/or delivery capabilities.

7. The method of claim 1, further comprising sending a notification to the user based on a successful completion of the personalized bundle order.

8. A computerized method for optimizing personalized bundling decisions, comprising:
initiating a bundling request via the SPoG UI in communication with the Personalized Bundling Module;
retrieving user preferences and historical data;
analyzing the user preferences and historical data;
querying the RTDM to fetch real-time data, the real-time data comprising products and/or user behavior;
applying a predictive analytics process by a Personalized Bundling Module based on the real-time data and the analyzed historical data, to determine optimal product combinations for bundling;
populating a bundle configuration template based on the analyzed user preferences and historical data;
validating the personalized bundle configuration by an Advanced Analytics and Machine Learning (AAML) Module;
presenting the finalized personalized bundle to the user via the SPoG UI;
logging details of the personalized bundling process for future analysis and system refinement;
initiating a feedback loop within the Personalized Bundling Module for continual improvement of the bundling recommendations.

9. The method of claim 8, further performing the feedback loop by utilizing machine learning algorithms to analyze user feedback and system performance for continual optimization of the personalized bundling process.

10. The method of claim 8, wherein the RTDM ingests real-time data comprising information associated with current market conditions and inventory.

11. The method of claim 8, further comprising generating real-time reports related to the personalized bundling process, the reports comprising metrics about user satisfaction and bundle customization.

12. The method of claim 8, wherein product selections for personalized bundles are made based on predefined criteria including user preferences, market trends, and product compatibility.

13. The method of claim 8, further comprising sending a notification to the user based on successful generation of the personalized bundle.

14. The method of claim 8, wherein the feedback loop for personalized bundling decisions is performed within a defined time frame based on user engagement and/or analytics.

15. A system for automating personalized bundling processes, comprising:
a Real-Time Data Mesh configured to aggregate and disseminate data including user preferences, market trends, and product information;
a Single Pane of Glass User Interface enabling user interactions and displaying personalized bundle options;
an Advanced Analytics and Machine Learning Module responsible for processing data and generating intelligent bundling recommendations;
a Personalized Bundling Module interacting with the SPoG UI and RTDM to execute a personalized bundling process including user preference analysis, product selection, and bundle generation.

16. The system of Claim 15, wherein the Personalized Bundling Module further comprises a logging mechanism to track user interactions and bundling choices for auditing and/or analytics.

17. The system of Claim 15, wherein the Personalized Bundling Module integrates with the AAML Module for validation and optimization of one or more personalized bundling recommendations, wherein the Personalized Bundling Module applies algorithms stored in the AAML Module to refine bundle recommendations.

18. The system of Claim 15, wherein the SPoG UI is designed to be accessible and responsive across various devices, providing an integrated user experience for bundle customization.

19. The system of Claim 15, wherein the RTDM is configured to standardize and harmonize data from diverse sources for consumption and analysis via the AAML Module.

20. The system of Claim 15, wherein the AAML Module incorporates machine learning models to be applied by the Personalized Bundling Module, wherein the machine learning modules are continually trained to optimize bundling processes based on one or more of user feedback and evolving market data.
